# EUROPEAN PATENT SPECIFICATION

(11) **EP 4 184 471 B1**
(45) Date of publication and mention of the grant of the patent: **19.11.2025**
(21) Application number: 21842699.7
(22) Date of filing: 26.05.2021
(51) Int. Cl.: G05D 1/00, G08G 1/00, G08G 1/09

(54) **INFORMATION PROCESSING METHOD AND INFORMATION PROCESSING SYSTEM**
INFORMATIONSVERARBEITUNGSVERFAHREN UND INFORMATIONSVERARBEITUNGSSYSTEM
PROCÉDÉ DE TRAITEMENT D'INFORMATIONS ET SYSTÈME DE TRAITEMENT D'INFORMATIONS

(30) Priority: 15.07.2020 JP 2020121355
(43) Date of publication of application: 24.05.2023
(73) Proprietor: Panasonic Intellectual Property Management Co., Ltd., Osaka-shi, Osaka 540-6207 (JP)
(72) Inventor: KUHARA, Shunsuke, Osaka-shi, Osaka 540-6207 (JP); HONDA, Yoshimasa, Osaka-shi, Osaka 540-6207 (JP)
(74) Representative: Novagraaf International SA
(86) International application number: PCT/JP2021/020092
(87) International publication number: WO 2022/014174

(56) References cited:
- JP-A- 2009 018 621
- JP-A- 2015 191 254
- JP-A- 2016 081 122
- JP-A- 2020 047 225
- JP-A- 2020 047 225
- JP-B1- 6 319 507
- US-A1- 2019 086 914

## Description

### [Technical Field]

The present disclosure relates to an information processing method and an information processing system.

### [Background Art]

For example, Japanese Patent No. 6319507 discloses a device for remotely operating, by an operator at a remote location, a vehicle capable of autonomous travel driverlessly. With this device, in the case where the vehicle cannot drive on its own, the remotely located operator can remotely operate the vehicle to enable the vehicle to travel.

Other systems for remote control of vehicles art known from the Patent Applications JP 2020047225A and US2019/086914 A1.

### [Summary of Invention]

### [Technical Problem]

However, there is a possibility that a plurality of mobile bodies capable of autonomous movement need to be remotely operated at the same point in the same time period. In such a case, the operator remotely operates each of the plurality of mobile bodies. This is burdensome to the operator.

In view of this, the present disclosure provides an information processing method, etc. that can reduce the burden on an operator in remotely operating a plurality of mobile bodies capable of autonomous movement at the same point in the same time period.

### [Solution to Problem]

An information processing method according to claim 1 is proposed.

These general and specific aspects may be implemented using a system, a method, an integrated circuit, a computer program, or a computer-readable recording medium such as CD-ROM, or any combination of a system, a method, an integrated circuit, a computer program, and a recording medium.

### [Advantageous Effects of Invention]

An information processing method, etc. according to an aspect of the present disclosure can reduce the burden on an operator in remotely operating a plurality of mobile bodies capable of autonomous movement at the same point in the same time period.

### [Brief Description of Drawings]

[FIG. 1]

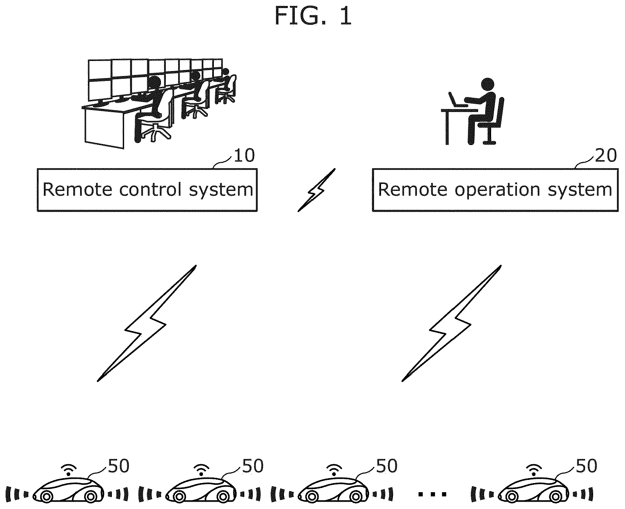

   FIG. 1 is a conceptual diagram illustrating an overall system composed of a remote control system, a remote operation system, and mobile bodies according to an embodiment.
[FIG. 2]

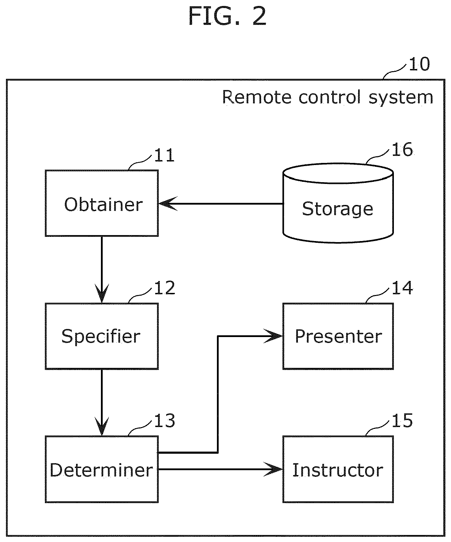

   FIG. 2 is a block diagram illustrating an example of the remote control system according to the embodiment.
[FIG. 3]

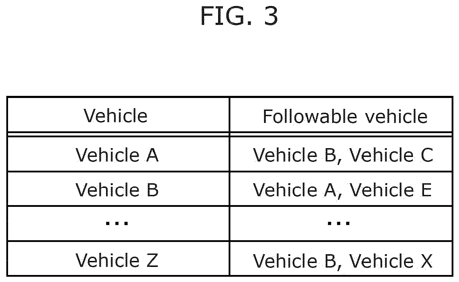

   FIG. 3 is a diagram illustrating an example of followable mobile body information.
[FIG. 4]

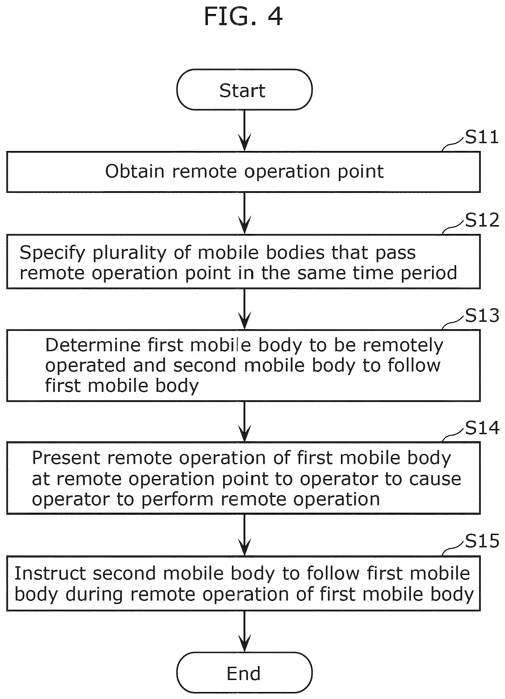

   FIG. 4 is a flowchart illustrating an example of an information processing method according to the embodiment.
[FIG. 5]

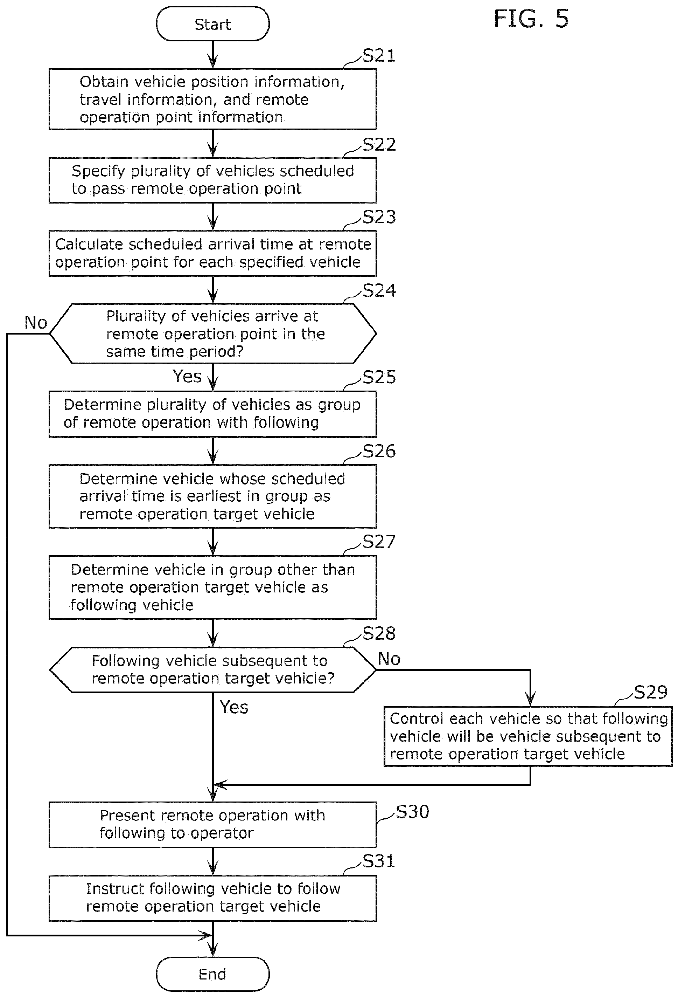

   FIG. 5 is a flowchart illustrating an example of the operation of the remote control system in use case 1.
[FIG. 6]

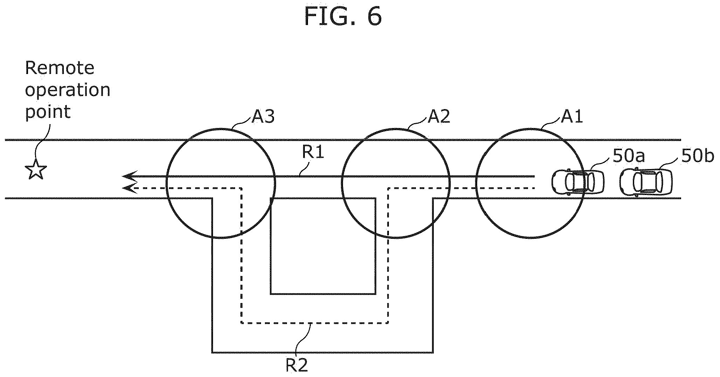

   FIG. 6 is a diagram for explaining the timing of starting following travel.
[FIG. 7]

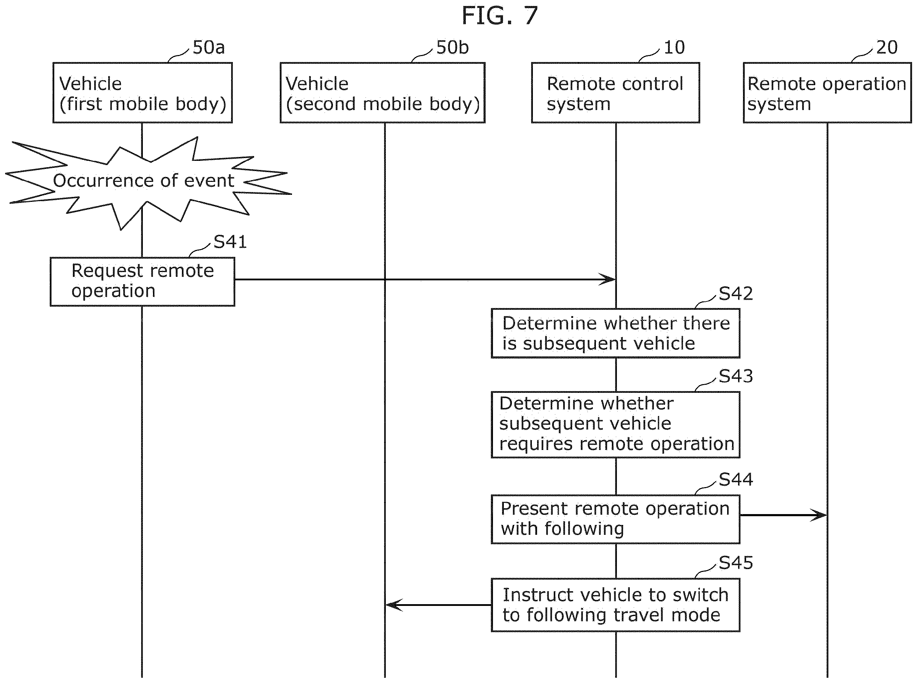

   FIG. 7 is a sequence diagram illustrating an example of the operation of the overall system in use case 2.
[FIG. 8]

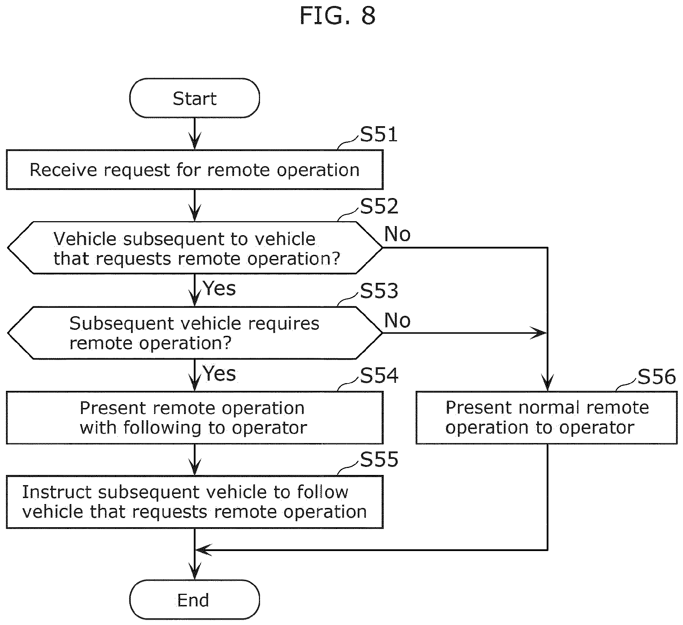

   FIG. 8 is a flowchart illustrating an example of the operation of the remote control system in use case 2.

### [Description of Embodiments]

An information processing method according to an aspect of the present disclosure is an information processing method executed by a computer, the information processing method including: obtaining a remote operation point at which remote operation of a mobile body capable of autonomous movement and remote operation for movement is performed; specifying a plurality of mobile bodies that pass the remote operation point in a same time period, based on a position of at least one mobile body; determining a first mobile body to be remotely operated and a second mobile body to follow the first mobile body, out of the plurality of mobile bodies specified; presenting remote operation of the first mobile body at the remote operation point to an operator, to cause the operator to perform the remote operation; and instructing the second mobile body to follow the first mobile body during the remote operation of the first mobile body.

In this way, the second mobile body follows the remotely operated first mobile body. Thus, just by remotely operating the presented first mobile body, the operator can move all of the plurality of mobile bodies that pass the remote operation point in the same time period, at the remote operation point. This can reduce the burden on the operator in remotely operating the plurality of mobile bodies capable of autonomous movement at the same point in the same time period.

The specifying may include: obtaining a movement plan of the at least one mobile body; and specifying the plurality of mobile bodies based on the position and the movement plan of the at least one mobile body.

For example, in the case where the remote operation point is known beforehand, whether the mobile body passes the remote operation point can be specified from the position and movement plan of the mobile body, and the time period in which the mobile body passes the remote operation point can be specified in the case where the mobile body passes the remote operation point. Hence, the plurality of mobile bodies predicted to pass the remote operation point in the same time period can be specified.

The determining may include: obtaining a position and a movement plan of each of the plurality of mobile bodies; and determining a mobile body that arrives at the remote operation point earliest as the first mobile body and an other mobile body as the second mobile body out of the plurality of mobile bodies, based on the position and the movement plan of each of the plurality of mobile bodies.

The mobile body estimated to arrive at the remote operation point earliest of the plurality of mobile bodies is likely to be located ahead of another mobile body estimated to arrive at the remote operation point later than the mobile body, at the remote operation point. By determining the mobile body estimated to arrive at the remote operation point earliest as the first mobile body and the other mobile body as the second mobile body out of the plurality of mobile bodies, it is possible to smoothly switch to the mode of remotely operating the first mobile body by the operator while causing the second mobile body to follow the first mobile body. In other words, the first mobile body and the second mobile body need not be changed in order in the direction of travel.

The determining may include: obtaining suitability of each of the plurality of mobile bodies for remote operation or following; and determining, based on the suitability: a mobile body suitable for remote operation as the first mobile body and an other mobile body as the second mobile body out of the plurality of mobile bodies; or a mobile body suitable for following as the second mobile body and an other mobile body as the first mobile body out of the plurality of mobile bodies; or a mobile body not suitable for remote operation as the second mobile body and an other mobile body as the first mobile body out of the plurality of mobile bodies; or a mobile body not suitable for following as the first mobile body and an other mobile body as the second mobile body out of the plurality of mobile bodies.

Thus, the mobile body suitable for remote operation or the mobile body not suitable for following may be determined as the first mobile body, and the mobile body suitable for following or the mobile body not suitable for remote operation may be determined as the second mobile body. This can improve the efficiency of remote operation or suppress a decrease in the efficiency.

The information processing method may further include: determining whether the second mobile body is subsequent to the first mobile body at start of the remote operation, based on a position and a movement plan of each of the first mobile body and the second mobile body; and instructing, when the second mobile body is not subsequent to the first mobile body, at least one of the first mobile body or the second mobile body to move so that the second mobile body will be subsequent to the first mobile body.

For example, depending on the current position and movement plan of each of the determined first mobile body and second mobile body, the second mobile body may not be subsequent to the first mobile body at the start of remote operation. In the case where it is determined that the second mobile body is not subsequent to the first mobile body at the start of remote operation, at least one of the first mobile body or the second mobile body is instructed to move so that the second mobile body will be subsequent to the first mobile body. This enables the second mobile body to be subsequent to the first mobile body at the start of remote operation. It is therefore possible to smoothly switch to the mode of remotely operating the first mobile body by the operator while causing the second mobile body to follow the first mobile body, at the start of remote operation. Moreover, the number of second mobile bodies that cannot follow the first mobile body can be reduced, and the number of remote operations can be reduced.

The instructing of the at least one of the first mobile body or the second mobile body may include: obtaining a restriction on at least one of a moving time, a stop time, a moving speed, or a moving range; and instructing the at least one of the first mobile body or the second mobile body to move according to the restriction.

For example, a mobile body may have a restriction on the moving time during which the mobile body can move and/or the stop time during which the mobile body can stop according to the movement plan and the like of the mobile body, a restriction on the maximum speed and/or minimum speed of the mobile body, a restriction on the moving range within which the mobile body can move, etc. By instructing the mobile body to move under such restrictions, the mobile body can be instructed to move while meeting the restrictions.

The remote operation point may be a point at which a mobile body that requests remote operation is located, and in the specifying, the plurality of mobile bodies may be specified based on, as the position of the at least one mobile body, a position of the mobile body that requests remote operation and a position of a mobile body around the mobile body that requests remote operation.

For example, in the case where the remote operation point is not known beforehand, the position of the mobile body that requests remote operation can be the remote operation point. In this case, from the position of the mobile body that requests remote operation and the position of the mobile body around the mobile body that requests remote operation, the mobile body that requests remote operation and the mobile body around the mobile body that requests remote operation can be specified as the plurality of mobile bodies predicted to pass the remote operation point in the same time period.

In the determining, a mobile body that requests remote operation at the remote operation point may be determined as the second mobile body.

Thus, by determining the mobile body estimated to request remote operation at the remote operation point as the second mobile body, it is possible to remotely operate such a mobile body indirectly by causing the mobile body to follow the first mobile body. Meanwhile, any mobile body estimated not to request remote operation continues autonomous movement, with it being possible to reduce the burden on the operator.

In the determining, a mobile body estimated to request remote operation at the remote operation point may be determined as the second mobile body, based on an operation property of whether the mobile body is capable of autonomous movement and remote operation, a history of remote operation of the mobile body, whether an occupant of the mobile body demands manual operation, or a management attribute of whether the mobile body is subjected to management.

Thus, whether the mobile body requests remote operation at the remote operation point can be estimated based on the operation property of whether the mobile body is capable of autonomous movement and remote operation, the history of remote operation, whether the occupant of the mobile body demands manual operation, or the management attribute of whether the mobile body is subjected to management.

In the determining, the second mobile body may be determined based on suitability for following, skill or experience of the operator in remote operation with following for mobile bodies, or a restriction on at least one of a moving time, a stop time, a moving speed, or a moving range.

Thus, the mobile body that is suitable for following or the mobile body that meets the restriction on at least one of the moving time, the stop time, the moving speed, or the moving range can be determined as the second mobile body. Alternatively, the second mobile body can be determined in the case where the skill or experience of the operator for remote operation with following of mobile bodies is sufficient.

The presenting may further include determining to perform the remote operation of the first mobile body with following of the second mobile body, when a load of the operator in remote operation is greater than or equal to a threshold or an available capacity of the operator is less than a threshold or when a factor that induces remote operation is not an anomaly in a mobile body affecting movement thereof.

For example, in the remote operation of the first mobile body with the following of the second mobile body, the operator tends to carefully perform the remote operation because it involves the following of the second mobile body. This decreases the moving speeds of the plurality of mobile bodies as a whole, and results in inefficiency. In the case where the load of the operator in the remote operation is less than a threshold or the available capacity of the operator in the remote operation is not less than a threshold, on the other hand, the operator can afford to perform more operation, and accordingly can remotely operate each of the plurality of mobile bodies instead of performing the remote operation of the first mobile body with the following of the second mobile body. Thus, the plurality of mobile bodies can be moved efficiently. Moreover, if the remote operation of the first mobile body with the following of the second mobile body is performed in the case where the factor that induces the remote operation is an anomaly in the mobile body affecting its movement, the safety is likely to be undermined. By performing the remote operation of the first mobile body with the following of the second mobile body in the case where the factor that induces the remote operation is not an anomaly in the mobile body affecting its movement, the safety can be ensured.

The presenting may further include permitting the operator to remotely operate the first mobile body after the second mobile body is instructed to follow the first mobile body.

In this way, it is possible to prevent the remote operation of the first mobile body from starting before the preparation for the second mobile body to follow the first mobile body is completed.

The presenting may further include obtaining sensing data of a sensor in the second mobile body from the second mobile body and presenting the sensing data to the operator, during the remote operation of the first mobile body with following of the second mobile body.

In this way, the operator can perform the remote operation of the first mobile body with the following of the second mobile body while checking the sensing data of the second mobile body following the first mobile body (that is, checking the situation around the second mobile body). This can ensure the safety of the second mobile body that is not remotely operated directly but follows the remotely operated first mobile body.

The presenting may further include providing the operator with an operation interface for controlling a sensor in the second mobile body, during the remote operation of the first mobile body with following of the second mobile body, and the instructing may further include instructing the second mobile body to control the sensor based on an operation on the operation interface.

In this way, the operator can perform the remote operation of the first mobile body with the following of the second mobile body while checking the situation of a desired region around the second mobile body by controlling the sensor in the second mobile body. This can ensure the safety of the second mobile body that is not remotely operated directly but follows the remotely operated first mobile body.

The presenting may further include, when the first mobile body and the second mobile body differ in a movement property, presenting, to the operator, a movement locus of the second mobile body estimated based on the remote operation of the first mobile body by the operator and a movement property of at least the second mobile body, during the remote operation of the first mobile body with following of the second mobile body.

For example, in the case where the first mobile body and the second mobile body differ in movement property, there is a possibility that the movement locus of the second mobile body following the first mobile body is different from the movement locus of the remotely operated first mobile body. Particularly in the case where the size of the second mobile body is larger than the size of the first mobile body, there is a possibility that, even when the first mobile body is remotely operated to move so as not to collide with an obstacle or the like, the second mobile body following the first mobile body collides with the obstacle or the like. By presenting the estimated movement locus of the second mobile body to the operator, the operator can remotely operate the first mobile body in consideration of the movement locus of the second mobile body, so that the safety of the second mobile body can be ensured.

The instructing may include instructing the second mobile body to keep following the first mobile body until the remote operation of the first mobile body with following of the second mobile body ends.

For example, if the second mobile body discontinues following the first mobile body during the remote operation of the first mobile body by the operator, the safety of the second mobile body is likely to be undermined. The state in which the first mobile body is remotely operated by the operator is a state in which the autonomous movement of the first mobile body is difficult, and equally the autonomous movement of the second mobile body following the first mobile body is difficult. Hence, by preventing the second mobile body from discontinuing following the first mobile body before the remote operation of the first mobile body ends, the safety of the second mobile body can be ensured.

The presenting may further include presenting, to the operator, a relationship between a remote operation end point and a position of the second mobile body based on the remote operation point, a position of the first mobile body, and the position of the second mobile body, during the remote operation of the first mobile body with following of the second mobile body.

In this way, the operator can end the remote operation of the first mobile body after making sure that the second mobile body has passed the remote operation end point. The second mobile body can be prevented from discontinuing following the first mobile body before the second mobile body passes the remote operation end point, so that the safety of the second mobile body can be ensured.

An information processing system according to an aspect of the present disclosure is an information processing system including: an obtainer that obtains a remote operation point at which remote operation of a mobile body capable of autonomous movement and remote operation for movement is performed; a specifier that specifies a plurality of mobile bodies that pass the remote operation point in a same time period, based on a position of at least one mobile body; a determiner that determines a first mobile body to be remotely operated and a second mobile body to follow the first mobile body, out of the plurality of mobile bodies specified; a presenter that presents remote operation of the first mobile body at the remote operation point to an operator, to cause the operator to perform the remote operation; and an instructor that instructs the second mobile body to follow the first mobile body during the remote operation of the first mobile body.

It is therefore possible to provide an information processing system that can reduce the burden on an operator in remotely operating a plurality of mobile bodies capable of autonomous movement at the same point in the same time period.

An embodiment will be described in detail below, with reference to the drawings.

The embodiment described below shows a general or specific example. The numerical values, shapes, materials, elements, the arrangement and connection of the elements, steps, the order of steps, etc. shown in the following embodiment are mere examples, and do not limit the scope of the present disclosure.

### [Embodiment]

An information processing method and an information processing system according to an embodiment will be described below.

FIG. 1 is a conceptual diagram illustrating an overall system composed of remote control system 10, remote operation system 20, and mobile bodies 50 according to the embodiment.

Each mobile body 50 is a mobile body capable of autonomous movement and remote operation for movement. Although mobile body 50 will be described as an autonomous vehicle below, mobile body 50 may be an unmanned aircraft or the like. For example, a plurality of mobile bodies 50 are traveling on a road or the like. The plurality of mobile bodies 50 communicate with each other by inter-vehicle communication, and also communicate with remote control system 10 and remote operation system 20 by wireless communication. For example, mobile body 50 includes one or more sensors such as a camera and LiDAR (light detection and ranging), and can transmit sensing data to remote control system 10 and remote operation system 20. Mobile body 50 has, for example, a function of switching the driving mode (e.g. autonomous mode and remote operation mode) in response to an instruction from remote control system 10. Mobile body 50 may have a function of requesting remote operation from remote control system 10 when an event (described in detail later) occurs.

Remote control system 10 is a system for monitoring mobile body 50 to remotely operate mobile body 50 and instructing remote operation system 20 to remotely operate mobile body 50. Remote control system 10 is an example of an information processing system. Remote control system 10 will be described in detail later.

Remote operation system 20 is a system for remotely operating mobile body 50. An operator remotely operates mobile body 50 through remote operation system 20. For example, remote operation system 20 includes an operating portion (for example, steering wheel) for remotely operating mobile body 50, a display for displaying video of the surroundings of mobile body 50 and sensing results of LiDAR or the like based on the sensing data of the sensors of mobile body 50, etc. The operator can remotely operate mobile body 50 by operating the operating portion while viewing the display.

Remote control system 10 and remote operation system 20 may be located in the same facility. Remote control system 10 and remote operation system 20 may be integrated (for example, remote control system 10 may include remote operation system 20).

The structure of remote control system 10 will be described below, with reference to FIG. 2.

FIG. 2 is a block diagram illustrating an example of remote control system 10 according to the embodiment.

Remote control system 10 includes obtainer 11, specifier 12, determiner 13, presenter 14, instructor 15, and storage 16.

For example, remote control system 10 is a computer including a processor, memory, and the like. The memory is read only memory (ROM), random access memory (RAM), etc., and can store a program executed by the processor. Obtainer 11, specifier 12, determiner 13, presenter 14, and instructor 15 are implemented by, for example, the processor executing the program stored in the memory. The memory storing the program may be storage 16, or memory other than storage 16.

The elements included in remote control system 10 may be, for example, implemented by a server. The elements included in remote control system 10 may be distributed between a plurality of servers. For example, at least part of the elements included in remote control system 10 may be implemented by a device mounted on mobile body 50 (for example, the below-described first mobile body).

Obtainer 11 obtains a remote operation point at which a mobile body capable of autonomous movement and remote operation for movement is remotely operated.

Specifier 12 specifies a plurality of mobile bodies 50 that pass the remote operation point in the same time period, based on the position of at least one mobile body 50.

Determiner 13 determines a first mobile body to be remotely operated and a second mobile body to follow the first mobile body, out of the specified plurality of mobile bodies 50.

Presenter 14 presents the remote operation of the first mobile body at the remote operation point, to the operator.

Instructor 15 instructs the second mobile body to follow the first mobile body during the remote operation of the first mobile body.

For example, remote control system 10 manages information about each mobile body 50 subjected to management by remote control system 10, such as position information indicating position, movement plan information indicating departure point, destination, movement route, etc., restriction information indicating a restriction on moving time, stop time, moving speed, moving range, etc., operation property information indicating operation property of whether the vehicle is capable of autonomous movement and remote operation, followable mobile body information indicating suitability for following regarding a mobile body that can be followed or a mobile body that can follow, remotely operable mobile body information indicating suitability of a remotely operable mobile body for remote operation, mobile body information indicating vehicle type, vehicle size, the number of sensors mounted, sensor type, sensor mounting position, etc., history information indicating history of remote operation, and remote operation point information indicating each remote operation point known beforehand. Storage 16 stores these information. These information may be stored in an external system, and remote control system 10 may obtain these information from the external system.

FIG. 3 is a diagram illustrating an example of followable mobile body information.

For example, the followable mobile body information may be information indicating, for each mobile body 50, mobile body 50 that can be followed. As illustrated in FIG. 3, vehicle A can follow vehicles B and C, vehicle B can follow vehicles A and E, and vehicle Z can follow vehicles B and X. Thus, mobile body 50 that can be followed may be managed for each mobile body 50. For example, the followable mobile body information may be information indicating, for each mobile body 50, mobile body 50 that can follow. As illustrated in FIG. 3, vehicle A can be followed by vehicles B and C, vehicle B can be followed by vehicles A and E, and vehicle Z can be followed by vehicles B and X. Thus, mobile body 50 that can follow may be managed for each mobile body 50.

Each functional element in remote control system 10 will be described in detail below, with reference to FIG. 4.

FIG. 4 is a flowchart illustrating an example of an information processing method according to the embodiment. The information processing method is a method executed by a computer (remote control system 10). That is, FIG. 4 is a flowchart illustrating an example of the operation of remote control system 10 according to the embodiment. The following is the description of the operation of remote control system 10, and is also the description of the information processing method.

First, obtainer 11 obtains a remote operation point (Step S11). Obtainer 11 may obtain a remote operation point known beforehand from storage 16, or obtain, as a remote operation point (i.e. remote operation point unknown beforehand), a point at which mobile body 50 that requests remote operation upon occurrence of an event in mobile body 50 is located.

The remote operation point is a point at which mobile body 50 needs to be remotely operated, that is, a point at which such a predetermined event that causes mobile body 50 to require remote operation occurs. The predetermined event is, for example, an event in which mobile body 50 is stuck or mobile body 50 cannot continue autonomous movement on its own.

The remote operation point known beforehand is, for example, a point at which remote operation took place in the past and repeatedly took place subsequently. Specifically, the remote operation point known beforehand is a point of junction with a busy road, a point around a place where traffic control is being performed by persons during roadwork, a point around a busy crosswalk, a point around a place where on-street parking is common, or the like. For example, the remote operation point known beforehand may be stored in storage 16 or the like according to an instruction by an administrator of remote control system 10.

The remote operation point unknown beforehand is, for example, a point at which no remote operation took place in the past and remote operation takes place for the first time according to a request by mobile body 50. Specifically, the remote operation point unknown beforehand is a point at which remote operation is temporarily required due to unexpected on-street parking.

Hereafter, a case where a remote operation point known beforehand is obtained is referred to as use case 1, and a case where a point at which mobile body 50 that requests remote operation is located is obtained as a remote operation point is referred to as use case 2.

Next, specifier 12 specifies a plurality of mobile bodies 50 that pass the remote operation point in the same time period, based on the position of at least one mobile body 50 (Step S12).

In use case 1, specifier 12 obtains the movement plan of at least one mobile body 50 (such as all mobile bodies 50, a plurality of mobile bodies 50 in a specific region, or one designated mobile body 50, hereafter also collectively referred to as "operational mobile body 50"), and, based on the position and movement plan of at least one operational mobile body 50, specifies a plurality of mobile bodies 50 predicted to pass the remote operation point in the same time period. For example, in the case where the remote operation point is known beforehand, whether mobile body 50 passes the remote operation point can be specified from the position and movement plan of mobile body 50, and the time period in which mobile body 50 passes the remote operation point can be specified in the case where mobile body 50 passes the remote operation point. Hence, the plurality of mobile bodies 50 predicted to pass the remote operation point in the same time period can be specified.

In use case 2, specifier 12 specifies a plurality of mobile bodies 50 predicted to pass the remote operation point in the same time period, based on, as the position of at least one operational mobile body 50, the position of mobile body 50 that requests remote operation and the position of mobile body 50 around mobile body 50 that requests remote operation. For example, in the case where the remote operation point is not known beforehand, the position of mobile body 50 that requests remote operation can be the remote operation point. In this case, from the position of mobile body 50 that requests remote operation and the position of mobile body 50 around mobile body 50 that requests remote operation, mobile body 50 that requests remote operation and mobile body 50 around mobile body 50 that requests remote operation can be specified as the plurality of mobile bodies 50 predicted to pass the remote operation point in the same time period. For example, mobile body 50 around mobile body 50 that requests remote operation may be mobile body 50 within the imaging range of a sensor mounted on mobile body 50 that requests remote operation, or mobile body 50 located within a predetermined range from the position of mobile body 50 that requests remote operation.

In use cases 1 and 2, specifier 12 may have the following functions.

For example, in the case where there is a traffic jam near the remote operation point, many mobile bodies 50 are predicted to pass the remote operation point in the same time period. In such a case, specifier 12 may generate a plurality of combinations of a plurality of mobile bodies 50 that pass the remote operation point in the same time period, according to the suitability of each mobile body 50 for remote operation or following, the skill or experience of the operator in remote operation with following for mobile bodies 50, or the load or available capacity of the operator in remote operation. This is because, if the number of second mobile bodies to follow one first mobile body increases, the remote operation of the first mobile body with the following of the second mobile body becomes difficult.

Next, determiner 13 determines a first mobile body to be remotely operated and a second mobile body to follow the first mobile body, out of the specified plurality of mobile bodies 50 (Step S13).

For example, in use case 1, determiner 13 may obtain the position and movement plan of each of the specified plurality of mobile bodies 50, and, based on the position and movement plan of each of the plurality of mobile bodies 50, determine a mobile body that arrives at the remote operation point earliest as the first mobile body and each of the other mobile bodies as the second mobile body out of the plurality of mobile bodies 50. Mobile body 50 estimated to arrive at the remote operation point earliest of the plurality of mobile bodies 50 is likely to be located ahead of another mobile body 50 estimated to arrive at the remote operation point later than mobile body 50, at the remote operation point. By determining mobile body 50 estimated to arrive at the remote operation point earliest as the first mobile body and the other mobile body 50 as the second mobile body out of the plurality of mobile bodies 50, it is possible to smoothly switch to the mode of remotely operating the first mobile body by the operator while causing the second mobile body to follow the first mobile body. In other words, the first mobile body and the second mobile body need not be changed in order in the direction of travel.

For example, in use case 1, determiner 13 may obtain the suitability of each of the specified plurality of mobile bodies 50 for remote operation or following. Based on the suitability for remote operation, determiner 13 may determine mobile body 50 suitable for remote operation as the first mobile body and other mobile body 50 as the second mobile body out of the plurality of mobile bodies 50. Based on the suitability for following, determiner 13 may determine mobile body 50 suitable for following as the second mobile body and other mobile body 50 as the first mobile body out of the plurality of mobile bodies 50. Based on the suitability for remote operation, determiner 13 may determine mobile body 50 not suitable for remote operation as the second mobile body and other mobile body 50 as the first mobile body out of the plurality of mobile bodies 50. Based on the suitability for following, determiner 13 may determine mobile body 50 not suitable for following as the first mobile body and other mobile body 50 as the second mobile body out of the plurality of mobile bodies 50. Thus, mobile body 50 suitable for remote operation or mobile body 50 not suitable for following may be determined as the first mobile body, and mobile body 50 suitable for following or mobile body 50 not suitable for remote operation may be determined as the second mobile body. This can improve the efficiency of remote operation or suppress a decrease in the efficiency.

For example, the suitability of each of the plurality of mobile bodies 50 for remote operation or following may be determined relatively between the plurality of mobile bodies 50.

As an example, mobile body 50 suitable for remote operation may be a mobile body on which sensors of high performance (for example, wider sensing range) are mounted or a mobile body on which a large number of sensors are mounted. This is because remote operation is basically performed based on the sensing information of the first mobile body. As another example, mobile body 50 suitable for remote operation may be a mobile body which the operator is accustomed to remotely operate. As another example, mobile body 50 suitable for remote operation may be a mobile body larger in size than other mobile body 50. This is because the subsequent second mobile body simply follows the same route as the first mobile body and thus the operator can perform operation without paying attention to the route of the second mobile body. In other words, in the case where the size of the first mobile body is smaller than the size of the second mobile body, there is a possibility that the second mobile body cannot follow the same route as the first mobile body and an additional measure is required for each of the first mobile body and the same route separately. Mobile body 50 not suitable for remote operation may be a mobile body having a faulty sensor or a stained sensor. Whether mobile body 50 is suitable for remote operation may be determined based on the combination of these elements.

The specified plurality of mobile bodies 50 may be presented to the operator, to make the operator select the first mobile body and the second mobile body from the plurality of mobile bodies 50. Remote operation-related information of each of the specified plurality of mobile bodies 50 may also be presented. Examples of the remote operation-related information include (1) the distance from the remote operation point to mobile body 50 or the scheduled arrival time at the remote operation point, (2) the suitability for remote operation or following, and (3) the operation property of whether mobile body 50 is capable of autonomous movement and remote operation, the history of remote operation, whether an occupant of the mobile body demands manual operation, the management attribute of whether mobile body 50 is subjected to management by remote control system 10, etc. A selection condition for each of the first mobile body and the second mobile body by the operator may be registered beforehand, and mobile body 50 that meets the selection condition may be automatically determined as the first mobile body or the second mobile body.

For example, in use case 2, determiner 13 may determine mobile body 50 that requests remote operation as the first mobile body, and mobile body 50 around mobile body 50 that requests remote operation (for example, mobile body 50 subsequent to mobile body 50 that requests remote operation) as the second mobile body. Thus, it is possible to smoothly switch to the mode of remotely operating mobile body 50 that requests remote operation by the operator while causing mobile body 50 around mobile body 50 that requests remote operation to follow mobile body 50 that requests remote operation.

In use cases 1 and 2, determiner 13 may have the following functions.

For example, determiner 13 may determine mobile body 50 that requests (i.e. that is estimated to request) remote operation at the remote operation point, as the second mobile body. By determining mobile body 50 estimated to request remote operation at the remote operation point as the second mobile body, mobile body 50 follows the first mobile body and thus can be remotely operated indirectly. In other words, mobile body 50 estimated not to request remote operation at the remote operation point is unlikely to need remote operation at the remote operation point, and therefore need not be determined as the second mobile body to follow the first mobile body. That is, mobile body 50 estimated not to request remote operation continues autonomous movement, with it being possible to reduce the burden on the operator.

For example, determiner 13 may determine, as the second mobile body, mobile body 50 estimated to request remote operation at the remote operation point, based on the operation property of whether mobile body 50 is capable of autonomous movement and remote operation, the history of remote operation, whether an occupant of the mobile body demands manual operation, or the management attribute of whether mobile body 50 is subjected to management by remote control system 10.

For example, determiner 13 may determine at least mobile body 50 capable of autonomous movement and remote operation, as the second mobile body. In other words, determiner 13 may estimate mobile body 50 incapable of autonomous movement and remote operation as mobile body 50 unlikely to request remote operation at the remote operation point, and not determine mobile body 50 as the second mobile body. Mobile body 50 incapable of autonomous movement and remote operation is, for example, a mobile body not having the functions of both autonomous movement and remote operation, or a mobile body in which these functions are not effective due to a fault or the like.

For example, determiner 13 may estimate at least mobile body 50 having history of being remotely operated as mobile body 50 that is likely to request remote operation at the remote operation point, and determine mobile body 50 as the second mobile body. In other words, determiner 13 may estimate mobile body 50 having no history of being remotely operated as mobile body 50 unlikely to request remote operation at the remote operation point, and not determine mobile body 50 as the second mobile body. For example, the history of being remotely operated is history that mobile body 50 was remotely operated to travel or followed the first mobile body to travel in the current remote operation point. For example, the history of being remotely operated is history that another mobile body 50 of the same or similar type was remotely operated to travel or followed the first mobile body to travel in the current remote operation point. The history of being remotely operated may be history in another remote operation point (for example, a point that can be identified on a map such as a junction) similar in environment to the current remote operation point, instead of the current remote operation point.

For example, determiner 13 may estimate at least mobile body 50 whose occupant does not demand manual operation as mobile body 50 that is likely to request remote operation at the remote operation point, and determine mobile body 50 as the second mobile body. In other words, determiner 13 may estimate mobile body 50 whose occupant demands manual operation as mobile body 50 that is unlikely to request remote operation at the remote operation point, and not determine mobile body 50 as the second mobile body. For example, in the case where the travel mode of each mobile body 50 is managed in remote control system 10, mobile body 50 that is capable of switching between the autonomous driving mode and the manual driving mode and is travelling in the autonomous driving mode may be regarded as a mobile body that requests remote operation, and mobile body 50 that is capable of switching between the autonomous driving mode and the manual driving mode and is travelling in the manual driving mode may be regarded as a mobile body that does not request remote operation.

For example, determiner 13 may estimate at least mobile body 50 subjected to management by remote control system 10 as mobile body 50 that is likely to request remote operation at the remote operation point, and determine mobile body 50 as the second mobile body. In other words, since mobile body 50 not subjected to management by remote control system 10 does not request remote operation from remote control system 10, determiner 13 need not determine mobile body 50 as the second mobile body.

The scheduled arrival time range or the remaining distance used in the process of specifying the plurality of mobile bodies 50 by specifier 12 may be set by the operator. The scheduled arrival time range or the remaining distance may vary according to the distance from the remote operation point to mobile body 50. For example, the scheduled arrival time range varies in such a manner that the scheduled arrival time range is 45 sec in the case where the distance from the remote operation point to mobile body 50 is 10 km and 15 sec in the case where the distance from the remote operation point to mobile body 50 is 1 km. The remaining distance may vary, as with the scheduled arrival time range. The value of variation may be set by the operator.

At least one of the first mobile body or the second mobile body selected from the specified plurality of mobile bodies 50 based on the foregoing selection conditions may be presented to the operator. The operator may be inquired whether to approve the presented at least one of the first mobile body or the second mobile body, and the first mobile body and the second mobile body may be determined in the case where the operator approves.

A machine learning model may be used to specify the plurality of mobile bodies by specifier 12. For example, the machine learning model is trained where the remote operation point and relationship data indicating the relationship between the remote operation point and operational mobile body 50 is training data and the plurality of mobile bodies 50 specified by the operator are correct answer data. The relationship data is, for example, the distance from the remote operation point to mobile body 50 or the scheduled arrival time at the remote operation point. In addition to the relationship data, data such as the operator, the position of mobile body 50 (or the type of the region to which the position belongs), the vehicle type of mobile body 50, and the time period may be used as training data in the training of the machine learning model.

A machine learning model may be used to determine the first mobile body and the second mobile body by determiner 13. For example, the machine learning model is trained where the remote operation-related information of each of the plurality of mobile bodies 50 specified by specifier 12 is training data and the first mobile body and the second mobile body selected by the operator are correct answer data. Examples of the remote operation-related information include (1) the distance from the remote operation point to mobile body 50 or the scheduled arrival time at the remote operation point, (2) the suitability for remote operation or following, and (3) the operation property of whether mobile body 50 is capable of autonomous movement and remote operation, the history of remote operation, whether an occupant of the mobile body demands manual operation, the management attribute of whether mobile body 50 is subjected to management by remote control system 10, etc. In addition to the relationship data, data such as the operator, the position of mobile body 50 (or the type of the region to which the position belongs), the vehicle type of mobile body 50, and the time period may be used as training data in the training of the machine learning model.

Instead of the foregoing machine learning model, a statistical method using past history may be used to specify the plurality of mobile bodies by specifier 12 and to determine the first mobile body and the second mobile body by determiner 13.

Thus, whether mobile body 50 requests remote operation at the remote operation point can be estimated based on the operation property of whether mobile body 50 is capable of autonomous movement and remote operation, the history of remote operation, whether the occupant of the mobile body demands manual operation, or the management attribute of whether mobile body 50 is subjected to management.

For example, determiner 13 may determine the second mobile body based on the suitability for following, the skill or experience of the operator in remote operation with following for mobile bodies 50, or a restriction on at least one of the moving time, the stop time, the moving speed, or the moving range.

For example, determiner 13 may determine mobile body 50 whose suitability for following meets a predetermined condition, as the second mobile body. Specifically, determiner 13 may determine, as the second mobile body, mobile body 50 having a function of following another mobile body 50, mobile body 50 (for example, mobile body 50 smaller in size than the first mobile body) of a size that allows mobile body 50 to follow another mobile body 50, or mobile body 50 having a sensor whose position or sensing range allows mobile body 50 to follow another mobile body 50. For example, the predetermined condition may be different according to the current position of mobile body 50. This is because the necessary suitability of the mobile body differs according to the place, the road width, etc. where infrastructure cooperation is possible.

For example, in the case where the skill or experience of the operator in remote operation with following for mobile bodies 50 is insufficient, determiner 13 may not determine the second mobile body. That is, the operator may not perform the remote operation of the first mobile body with the following of the second mobile body. The remote operation of mobile body 50 with the following of other mobile body 50 is more difficult than the remote operation of mobile body 50 without the following of other mobile body 50. Hence, if the skill or experience of the operator in remote operation with following for mobile bodies 50 is insufficient, the safety is likely to be undermined. Determiner 13 may inquire of the operator whether the skill or experience of the operator in remote operation with following for mobile bodies 50 is sufficient.

For example, determiner 13 may determine mobile body 50 that meets the restriction on at least one of the moving time, the stop time, the moving speed, or the moving range, as the second mobile body. For example, determiner 13 may not determine mobile body 50 that is providing service (for example, a passenger-carrying vehicle carrying passengers), as the second mobile body. Mobile body 50 that is providing service may be, for example, restricted on any of the moving time, the stop time, the moving speed, and the moving range. If such mobile body 50 is determined as the second mobile body, mobile body 50 may fail to meet the restriction. If mobile body 50 that is providing service can maintain the service quality in the case of meeting the restriction on at least one of the moving time, the stop time, the moving speed, or the moving range, mobile body 50 may be determined as the second mobile body. Likewise, determiner 13 may determine mobile body 50 that meets the restriction on at least one of the moving time, the stop time, the moving speed, or the moving range, as the first mobile body.

Thus, mobile body 50 suitable for following or mobile body 50 that meets the restriction on at least one of the moving time, the stop time, the moving speed, or the moving range may be determined as the second mobile body. Alternatively, the second mobile body may be determined in the case where the skill or experience of the operator in remote operation with following for mobile bodies 50 is sufficient. In other words, the second mobile body may not be determined in the case where the skill or experience of the operator in remote operation with following for mobile bodies 50 is sufficient.

Next, presenter 14 presents the remote operation of the first mobile body at the remote operation point to the operator, to cause the operator to perform the remote operation (Step S14). In use cases 1 and 2, presenter 14 may have the following functions.

For example, in the case where the load of remote control system 10 (for example, the operator) in the remote operation is greater than or equal to a threshold or the available capacity of remote control system 10 in the remote operation is less than a threshold or in the case where the factor that induces the remote operation is not an anomaly in mobile body 50 affecting its movement, presenter 14 may determine to perform the remote operation of the first mobile body with the following of the second mobile body, and present the remote operation of the first mobile body at the remote operation point to the operator to cause the operator to perform the remote operation. For example, the load of remote control system 10 is the number or proportion of operators or remote operation devices required for the remote operation, and the available capacity of remote control system 10 is the number or proportion of operators or remote operation devices immediately available for the remote operation. For example, in the remote operation of the first mobile body with the following of the second mobile body, the operator tends to carefully perform the remote operation because it involves the following of the second mobile body. This decreases the moving speeds of the plurality of mobile bodies 50 as a whole, and results in inefficiency. In the case where the load of the operator in the remote operation is less than a threshold or the available capacity of the operator in the remote operation is not less than a threshold, on the other hand, the operator can afford to perform more operation, and accordingly can remotely operate each of the plurality of mobile bodies 50 instead of performing the remote operation of the first mobile body with the following of the second mobile body. Thus, the plurality of mobile bodies 50 can be moved efficiently. In the case where the factor that induces the remote operation is an anomaly (for example, a faulty sensor or a stained sensor) in mobile body 50 affecting its movement, the remote operation of the first mobile body with the following of the second mobile body is unnecessary because mobile body 50 other than mobile body 50 having the anomaly does not require remote operation.

For example, presenter 14 may permit the operator to remotely operate the first mobile body after the second mobile body is instructed to follow the first mobile body. For example, the start of the remote operation of the first mobile body may be prohibited until the preparation of the following of the second mobile body is completed (for example, the movement to the following position is completed), and presenter 14 may present the permission of the remote operation to the operator in the case where the preparation of the following of the second mobile body is completed. In this way, it is possible to prevent the remote operation of the first mobile body from starting before the preparation for the second mobile body to follow the first mobile body is completed. Whether the preparation of the following of the second mobile body is completed may be, for example, determined depending on whether the inter-vehicle communication is established, whether the adjustment of the position and/or direction of the second mobile body relative to the first mobile body is completed, or whether the adjustment of the position of the sensor in the first mobile body or the second mobile body for the operation of following the remote operation is completed. For example, the operator may be instructed to check the position of the sensor in each of the first mobile body and the second mobile body before the start of the remote operation, after which the operator is permitted to perform the remote operation.

For example, presenter 14 may obtain the sensing data (or data obtained by processing the sensing data) of the sensor in the second mobile body from the second mobile body and present the sensing data to the operator, during the remote operation of the first mobile body with the following of the second mobile body. In this way, the operator can perform the remote operation of the first mobile body with the following of the second mobile body while checking the sensing data of the second mobile body following the first mobile body (that is, checking the situation around the second mobile body). This can ensure the safety of the second mobile body that is not remotely operated directly but follows the remotely operated first mobile body.

For example, presenter 14 may provide the operator with an operation interface for controlling the sensor in the second mobile body, during the remote operation of the first mobile body with the following of the second mobile body. In this way, the operator can perform the remote operation of the first mobile body with the following of the second mobile body while checking the situation of a desired region around the second mobile body by controlling the sensor in the second mobile body. This can ensure the safety of the second mobile body that is not remotely operated directly but follows the remotely operated first mobile body. For example, a control signal for controlling the sensor in the second mobile body may be transmitted from remote operation system 20 to the second mobile body directly, or transmitted from remote operation system 20 to the second mobile body via the first mobile body. If the sensor in the second mobile body for following the first mobile body is controlled by the operator, the second mobile body may be unable to follow the first mobile body. Accordingly, the operator may control only the sensors other than the sensor in the second mobile body. Alternatively, the operator may control the sensor in the second mobile body in a state in which the range (for example, the moving range or the range of the direction of the sensor in the second mobile body) in which following is possible is limited. When the remote operation of the first mobile body with the following of the second mobile body ends (i.e. when the second mobile body switches from the following mode to the autonomous driving mode), the position or direction of the sensor may automatically return to the state in the autonomous driving mode before the following mode.

For example, in the case where the first mobile body and the second mobile body differ in the movement property, presenter 14 may present, to the operator, the movement locus of the second mobile body estimated based on the remote operation of the first mobile body by the operator and the movement property of at least the second mobile body, during the remote operation of the first mobile body with the following of the second mobile body. For example, in the case where the first mobile body and the second mobile body differ in movement property, there is a possibility that the movement locus of the second mobile body following the first mobile body is different from the movement locus of the remotely operated first mobile body. Particularly in the case where the size of the second mobile body is larger than the size of the first mobile body, there is a possibility that, even when the first mobile body is remotely operated to move so as not to collide with an obstacle or the like, the second mobile body following the first mobile body collides with the obstacle or the like. In view of this, the estimated movement locus of the second mobile body is presented to the operator. For example, the guide of the movement route corresponding to one of the first mobile body and the second mobile body that is larger in vehicle body size (for example, vehicle length) is presented. Consequently, the operator can remotely operate the first mobile body in consideration of the movement locus of the second mobile body, so that the safety of the second mobile body can be ensured.

For example, presenter 14 may present, to the operator, the relationship between the remote operation end point and the position of the second mobile body based on the remote operation point, the position of the first mobile body, and the position of the second mobile body, during the remote operation of the first mobile body with the following of the second mobile body. In this way, the operator can end the remote operation of the first mobile body after making sure that the second mobile body has passed the remote operation end point. The second mobile body can be prevented from discontinuing following the first mobile body before the second mobile body passes the remote operation end point, so that the safety of the second mobile body can be ensured.

For example, in the case where there is history of remote operation of mobile body 50 at the remote operation point in the past, presenter 14 may obtain a remote operation end point based on the history, and present, to the operator, the continuation of the remote operation of the first mobile body until the second mobile body passes the end point. For example, when the second mobile body has passed the end point, information that the second mobile body has passed the end point may be presented to the operator. For example, the travel mode of the first mobile body may be prohibited from changing from the remote operation mode to the autonomous travel mode until the second mobile body passes the end point. Presenter 14 may present a point at which the switching from the remote operation mode to the autonomous movement mode is permitted. In the case where there is no such history, the point at which the switching from the remote operation mode to the autonomous travel mode is permitted may be set by the operator.

Instructor 15 instructs the second mobile body to follow the first mobile body during the remote operation of the first mobile body (Step S15). For example, when an instruction to switch from the autonomous travel mode to the following travel mode is issued from remote control system 10 to the second mobile body, the second mobile body starts the following travel mode. At the timing when the operator issues an instruction to switch the first mobile body from the remote operation mode to the autonomous travel mode, the second mobile body is switched from the following travel mode to the autonomous travel mode. In this way, the second mobile body follows the remotely operated first mobile body. Thus, just by remotely operating the presented first mobile body, the operator can move all of the plurality of mobile bodies 50 that pass the remote operation point in the same time period, at the remote operation point. This can reduce the burden on the operator in remotely operating the plurality of mobile bodies 50 capable of autonomous movement at the same point in the same time period.

For example, in use case 1, instructor 15 may determine whether the second mobile body is subsequent to the first mobile body at start of the remote operation based on the position and the movement plan of each of the first mobile body and the second mobile body, and, in the case where the second mobile body is not subsequent to the first mobile body, instruct at least one of the first mobile body or the second mobile body to move so that the second mobile body will be subsequent to the first mobile body. For example, depending on the current position and movement plan of each of the determined first mobile body and second mobile body, the second mobile body may not be subsequent to the first mobile body at the start of remote operation. In the case where it is determined that the second mobile body is not subsequent to the first mobile body at the start of remote operation, instructor 15 may instruct at least one of the first mobile body or the second mobile body to move so that the second mobile body will be subsequent to the first mobile body. This enables the second mobile body to be subsequent to the first mobile body at the start of remote operation. It is therefore possible to smoothly switch to the mode of remotely operating the first mobile body by the operator while causing the second mobile body to follow the first mobile body, at the start of remote operation.

Here, instructor 15 may obtain a restriction on at least one of the moving time, the stop time, the moving speed, or the moving range, and instruct the at least one of the first mobile body or the second mobile body to move according to the restriction. For example, mobile body 50 may have a restriction on the moving time during which mobile body 50 can move and/or the stop time during which mobile body 50 can stop, a restriction on the maximum speed and/or minimum speed of mobile body 50, a restriction on the moving range within which mobile body 50 can move, etc., according to the movement plan and the like of mobile body 50. By instructing mobile body 50 to move under such restrictions, mobile body 50 can be instructed to move while meeting the restrictions.

In use cases 1 and 2, instructor 15 may have the following functions.

For example, when presenter 14 provides the operator with the operation interface for controlling the sensor in the second mobile body during the remote operation of the first mobile body with the following of the second mobile body, instructor 15 may instruct the second mobile body to control the sensor based on an operation on the operation interface. In this way, the operator can perform the remote operation of the first mobile body with the following of the second mobile body while checking the situation of a desired region around the second mobile body by controlling the sensor in the second mobile body. This can ensure the safety of the second mobile body that is not remotely operated directly but follows the remotely operated first mobile body.

For example, instructor 15 may instruct the second mobile body to keep following the first mobile body until the remote operation of the first mobile body with the following of the second mobile body ends. For example, if the second mobile body discontinues following the first mobile body during the remote operation of the first mobile body by the operator, the safety of the second mobile body is likely to be undermined. The state in which the first mobile body is remotely operated by the operator is a state in which the autonomous movement of the first mobile body is difficult, and equally the autonomous movement of the second mobile body following the first mobile body is difficult. Hence, by preventing the second mobile body from discontinuing following the first mobile body before the remote operation of the first mobile body ends, the safety of the second mobile body can be ensured.

For example, instructor 15 may instruct the first mobile body to switch from the remote operation mode to the autonomous travel mode when the first mobile body has passed the remote operation end point, and instruct the second mobile body to switch from the following mode to the autonomous travel mode when the second mobile body has passed the end point. Each of the first mobile body and the second mobile body automatically switches to the autonomous travel mode when it passes the end point, so that the operator can save the trouble of switching the mobile body from the remote operation mode to the autonomous travel mode. The burden on the operator can thus be reduced. In a situation in which only the first mobile body has passed the end point and the second mobile body has not passed the end point, the second mobile body may be monitored by the operator until the second mobile body passes the end point.

For example, in the case where the second mobile body moves along the same movement route as the first mobile body even after the second mobile body passes the remote operation end point, instructor 15 may instruct the second mobile body to keep following the first mobile body while it moves along the same movement route as the first mobile body.

For example, in the case where new mobile body 50 that can follow the first mobile body or the second mobile body following the first mobile body is detected during the remote operation of the first mobile body with the following of the second mobile body, instructor 15 may instruct new mobile body 50 to follow the first mobile body or the second mobile body. In this case, the operator may be instructed to temporarily stop the remote operation of the first mobile body to cause the first mobile body to wait until the preparation of the following of new mobile body 50 is completed. Alternatively, the operator may be inquired whether to add new mobile body 50 as a second mobile body.

A specific example of the operation of remote control system 10 in use case 1 in which a remote operation point known beforehand is obtained will be described below.

FIG. 5 is a flowchart illustrating an example of the operation of remote control system 10 in use case 1.

First, obtainer 11 obtains vehicle position information, travel information, and remote operation point information (Step S21). For example, obtainer 11 obtains a remote operation point known beforehand, obtains, out of the plurality of mobile bodies 50 (hereafter also referred to as vehicles) managed by remote control system 10, the position of each of a plurality of vehicles located around the remote operation point, and obtains the travel information (travel route, arrival time at each travel location, etc.) of each of the plurality of vehicles.

Next, specifier 12 specifies a plurality of vehicles scheduled to pass the remote operation point (Step S22), and calculates the scheduled arrival time at the remote operation point for each specified vehicle (Step S23). For example, specifier 12 can specify the plurality of vehicles scheduled to pass the remote operation point from the vehicle position information, the travel information, and the remote operation point information, and calculate the scheduled arrival time for each specified vehicle. For example, specifier 12 may specify the plurality of vehicles scheduled to pass the remote operation point out of a plurality of vehicles having the same travel direction.

Next, specifier 12 determines whether a plurality of vehicles arrive at the remote operation point in the same time period (Step S24). For example, specifier 12 may compare the respective scheduled arrival times of the plurality of vehicles scheduled to pass the remote operation point and determine whether a plurality of vehicles have the same scheduled arrival time, to determine whether a plurality of vehicles arrive at the remote operation point in the same time period. The range of the scheduled arrival time regarded as the same (i.e. allowable deviation from the scheduled arrival time) may be greater when the time from the current time to the scheduled arrival time is longer. This is because the difference between the actual arrival time and the scheduled arrival time is likely to be greater when the time from the current time to the scheduled arrival time is longer.

Specifier 12 may compare the respective remaining distances of the plurality of vehicles scheduled to pass the remote operation point from their current positions to the remote operation point and determine whether a plurality of vehicles have the same remaining distance, to determine whether a plurality of vehicles arrive at the remote operation point in the same time period. The range of the remaining distance regarded as the same (i.e. allowable deviation from the remaining distance) may be greater when the remaining distance is longer.

Specifier 12 may compare the respective travel routes of the plurality of vehicles scheduled to pass the remote operation point from their current positions to the remote operation point and the respective current positions of the plurality of vehicles and determine whether a plurality of vehicles have the same travel route and the same current position, to determine whether a plurality of vehicles arrive at the remote operation point in the same time period. In this case, the determination can be performed without calculating the scheduled arrival times or the remaining distances. The comparison of the scheduled arrival times or the comparison of the remaining distances is advantageous in that vehicles that arrive at the remote operation point in the same time period can be selected from a plurality of vehicles that differ in current position or travel route.

In the case where a plurality of vehicles do not arrive at the remote operation point in the same time period (Step S24: No), the process ends. In this case, the remote operation of the first mobile body with the following of the second mobile body (hereafter also referred to as remote operation with following) is not performed.

In the case where a plurality of vehicles arrive at the remote operation point in the same time period (Step S24: Yes), specifier 12 determines the plurality of vehicles that arrive at the remote operation point in the same time period as a group of remote operation with following (Step S25). Here, specifier 12 may exclude, from the group of remote operation with following, any vehicle (for example, vehicle providing service) that, if subjected to remote operation with following, will arrive at its destination at least a predetermined time behind schedule, thereby causing a problem. In the case of performing remote operation with following, there is a possibility that a vehicle stops or decelerates and arrives at its destination late. For example, for a passenger-carrying vehicle carrying passengers, the service quality is likely to decrease.

Next, determiner 13 determines a vehicle whose scheduled arrival time is earliest in the determined group, as a remote operation target vehicle (Step S26). The remote operation target vehicle is an example of the first mobile body. Determiner 13 may determine a vehicle whose current position is nearest the remote operation point in the determined group, as the remote operation target vehicle. Alternatively, determiner 13 may determine the remote operation target vehicle based on the followable mobile body information illustrated in FIG. 3.

Next, determiner 13 determines a vehicle in the determined group other than the remote operation target vehicle, as a following vehicle (Step S27). The following vehicle is an example of the second mobile body. For example, in the case where determiner 13 determines the vehicle whose scheduled arrival time is earliest as the remote operation target vehicle, determiner 13 determines a vehicle other than the vehicle whose scheduled arrival time is earliest as the following vehicle. In the case where determiner 13 determines the vehicle whose current position is nearest the remote operation point as the remote operation target vehicle, determiner 13 determines a vehicle other than the vehicle whose current position is nearest the remote operation point as the following vehicle. Alternatively, determiner 13 may determine a vehicle other than the remote operation target vehicle determined based on the followable mobile body information, as the following vehicle.

In the case where there are three or more vehicles that arrive at the remote operation point in the same time period, the number of following vehicles is two or more. For example, determiner 13 may determine the order of following of two or more following vehicles.

In the case where determiner 13 determines the remote operation target vehicle and the following vehicle based on the followable mobile body information, that is, in the case where determiner 13 determines the remote operation target vehicle and the following vehicle without consideration for their scheduled arrival times or positions, there is a possibility that the current position of the remote operation target vehicle is behind the current position of the following vehicle. Even in the case where determiner 13 determines the vehicle whose scheduled arrival time is earliest or the vehicle whose current position is nearest the remote operation point as the remote operation target vehicle and determine the other vehicle as the following vehicle, the current position of the remote operation target vehicle is not necessarily ahead of the current position of the following vehicle.

In view of this, instructor 15 determines whether the following vehicle is a vehicle subsequent to the remote operation target vehicle (Step S28). For example, instructor 15 may determine whether the following vehicle is located within a predetermined distance behind the remote operation target vehicle, to determine whether the following vehicle is a vehicle subsequent to the remote operation target vehicle. Whether the following vehicle is within the predetermined distance behind the remote operation target vehicle may be determined based on the sensing data of the sensor in the remote operation target vehicle or the following vehicle, or determined based on GPS (Global Positioning System) data.

In the case where the following vehicle is not a vehicle subsequent to the remote operation target vehicle (Step S28: No), instructor 15 performs driving control on at least one of the remote operation target vehicle or the following vehicle so that the following vehicle will be a vehicle subsequent to the remote operation target vehicle (Step S29). For example, driving control of decreasing the speed of the following vehicle or stopping the following vehicle or driving control of increasing the speed of the remote operation target vehicle is performed. Alternatively, driving control of decreasing the speed of the following vehicle or stopping the following vehicle and driving control of increasing the speed of the remote operation target vehicle are both performed. Driving control of stopping a vehicle may be performed, for example, in the case where there is an area where on-street parking is possible. Even in the case where the following vehicle is located behind the remote operation target vehicle, the distance between the remote operation target vehicle and the following vehicle may be great. In such a case, driving control of decreasing the speed of the remote operation target vehicle or stopping the remote operation target vehicle or driving control of increasing the speed of the following vehicle is performed. Even in the case where the following vehicle is located behind the remote operation target vehicle, another vehicle may be present between the remote operation target vehicle and the following vehicle. In such a case, driving control of decreasing the speed of the remote operation target vehicle or stopping the remote operation target vehicle or driving control of increasing the speed of the following vehicle to overtake the other vehicle is performed. Driving control of overtaking may be performed, for example, in the case where there is an area where overtaking is possible (for example, a passing lane).

For example, in the case of performing driving control such as deceleration or stop on the remote operation target vehicle, there is a possibility that the quality of service such as transporting occupants decreases. To prevent such a decrease in service quality, control other than driving control such as deceleration or stop may be performed on the remote operation target vehicle. For example, the travel route to the destination may be changed so that the remote operation target vehicle can arrive at the destination earlier.

While the determined remote operation target vehicle and following vehicle are travelling to the remote operation point, determiner 13 may change the assignment of the remote operation target vehicle and the following vehicle according to the changing position of each vehicle, the scheduled arrival time, the remaining distance, etc. For example, in the case where the following vehicle has come to be located ahead of the remote operation target vehicle while the determined remote operation target vehicle and following vehicle are travelling to the remote operation point, determiner 13 may redetermine the determined following vehicle as the remote operation target vehicle and redetermine the determined remote operation target vehicle as the following vehicle.

In the case where a vehicle is predicted not to arrive at the remote operation point in the same time period (for example, a vehicle for which the difference between the current scheduled arrival time and the initial scheduled arrival time increases) while the determined remote operation target vehicle and following vehicle are travelling to the remote operation point, determiner 13 may remove the vehicle from the group of remote operation with following. For example, in the case where the vehicle is the remote operation target vehicle, remote operation with following may be canceled. Alternatively, a plurality of vehicles that arrive at the remote operation point in the same time period may be determined again as a new group.

In the case where the following vehicle is a vehicle subsequent to the remote operation target vehicle (Step S28: Yes) or in the case where driving control is performed on at least one of the remote operation target vehicle or the following vehicle to cause the following vehicle to be subsequent to the remote operation target vehicle in Step S29, presenter 14 presents remote operation with following to the operator (Step S30), and instructor 15 instructs the following vehicle to follow the remote operation target vehicle (Step S31). In this way, the following vehicle follows the remotely operated remote operation target vehicle. Thus, just by remotely operating the presented remote operation target vehicle, the operator can cause both the remote operation target vehicle and the following vehicle that pass the remote operation point in the same time period to travel at the remote operation point. This can reduce the burden on the operator in remotely operating the plurality of vehicles capable of autonomous travel at the same point in the same time period.

The following vehicle may be instructed to follow the remote operation target vehicle before the remote operation with following is presented to the operator. This will be described below, with reference to FIG. 6.

FIG. 6 is a diagram for explaining the timing of starting following travel. In FIG. 6, vehicle 50a is the remote operation target vehicle, and vehicle 50b is the following vehicle. Route R1 is the travel route of vehicle 50a, and route R2 is the travel route of vehicle 50b.

For example, suppose, when vehicle 50a travels area A1, vehicle 50b is determined to be a vehicle subsequent to vehicle 50a. For example, vehicle 50b can be switched from the autonomous driving mode to the following travel mode at this timing. However, in the case where the subsequent travel route of vehicle 50a and the subsequent travel route of vehicle 50b are different, such as route R1 and route R2, the following travel mode of vehicle 50b needs to be discontinued to return vehicle 50b to the autonomous driving mode in area A2, which is inefficient. In view of this, in the case where vehicle 50b is determined to be a vehicle subsequent to vehicle 50a and vehicles 50b and 50a are traveling in area A3 where the routes of vehicles 50b and 50a to the remote operation point are the same, instructor 15 may instruct vehicle 50b to follow vehicle 50a.

Thus, in the case where instructor 15 determines that the following vehicle is a vehicle subsequent to the remote operation target vehicle and the following vehicle and the remote operation target vehicle are traveling in an area where their routes to the remote operation point are the same, instructor 15 may instruct the following vehicle to follow the remote operation target vehicle. In the case where the following vehicle is providing service and stops for occupants to get on or off midway, the following travel mode of the following vehicle is temporarily discontinued and the following vehicle returns to the autonomous driving mode. In view of this, instructor 15 may instruct the following vehicle to follow the remote operation target vehicle in the case where instructor 15 determines that the following vehicle will not stop for occupants to get on or off on its way to the remote operation point.

A specific example of the operation of remote control system 10 in use case 2 in which a point at which mobile body 50 that requests remote operation is located is obtained as a remote operation point will be described below.

FIG. 7 is a sequence diagram illustrating an example of the operation of the overall system in use case 2. In FIG. 7, mobile body 50 that requests remote operation is vehicle 50a, and mobile body 50 around vehicle 50a (specifically, vehicle subsequent to vehicle 50a) is vehicle 50b. Vehicle 50a is an example of a vehicle determined as the first mobile body. Vehicle 50b is an example of a vehicle determined as the second mobile body.

For example, suppose a predetermined event has occurred in vehicle 50a. The predetermined event is, for example, an event that causes vehicle 50a to request remote operation, such as an event in which vehicle 50a is stuck or vehicle 50a cannot continue autonomous travel on its own. Specific examples of the predetermined event include the case where traffic control is being performed by persons during construction, the case where a vehicle merges into a busy road, the case where a vehicle passes a busy crosswalk, and the case where a vehicle pulls out of a center lane.

Since the predetermined event has occurred, vehicle 50a requests remote operation from remote control system 10 (Step S41).

In the case where remote control system 10 receives the request for remote operation, remote control system 10 determines whether there is a subsequent vehicle behind vehicle 50a that requests remote operation (Step S42).

In the case where remote control system 10 determines that there is a subsequent vehicle (for example, vehicle 50b) behind vehicle 50a, remote control system 10 determines whether vehicle 50b is a vehicle that requires remote operation (Step S43).

In the case where remote control system 10 determines that vehicle 50b is a vehicle that requires remote operation, remote control system 10 presents the remote operation of vehicle 50a with the following of vehicle 50b to remote operation system 20 (i.e. operator) (Step S44).

Moreover, in the case where remote control system 10 determines that vehicle 50b is a vehicle that requires remote operation, remote control system 10 instructs vehicle 50b to follow vehicle 50a (Step S45).

Vehicle 50b then switches to the following travel mode, and notifies remote operation system 20 that the preparation to follow vehicle 50a is completed. Remote operation system 20 then starts the remote operation of vehicle 50a. Subsequently, for example once vehicle 50b has passed a remote operation end point, remote operation system 20 notifies vehicles 50a and 50b of the end of the remote operation, and vehicles 50a and 50b switch to the autonomous driving mode.

A specific example of the operation of remote control system 10 in use case 2 will be described below, with reference to FIG. 8.

FIG. 8 is a flowchart illustrating an example of remote control system 10 in use case 2.

First, remote control system 10 receives a request for remote operation from mobile body 50 (for example, vehicle 50a) (Step S51). Obtainer 11 then obtains a remote operation point which is the point where vehicle 50a that requests remote operation is located.

Next, specifier 12 determines whether there is a vehicle subsequent to vehicle 50a that requests remote operation (Step S52). For example, specifier 12 may determine whether there is a subsequent vehicle based on sensing data in the rear of vehicle 50a. For example, in the case where the distance between vehicle 50a and a vehicle behind vehicle 50a is less than or equal to a predetermined distance (for example, 5 m), specifier 12 may determine the vehicle behind vehicle 50a as the subsequent vehicle. Even when the distance between vehicle 50a and the vehicle behind vehicle 50a is less than or equal to the predetermined distance, if there is a traffic light between vehicle 50a and the vehicle behind vehicle 50a, specifier 12 may not determine the vehicle behind vehicle 50a as the subsequent vehicle. Here, specifier 12 may take the state of the traffic light into account. In the case where there is a traffic light between vehicle 50a and the vehicle behind vehicle 50a, specifier 12 may determine the vehicle behind vehicle 50a as the subsequent vehicle if the traffic light is green, and not determine the vehicle behind vehicle 50a as the subsequent vehicle if the traffic light is red. In the case where the distance between vehicle 50a and the vehicle behind vehicle 50a is greater than the predetermined distance, vehicle 50a may wait so that the distance will be less than or equal to the predetermined distance. The waiting time is not limited, but may be short in order to avoid obstructing other traffic. Alternatively, vehicle 50a may not wait in the case where it is determined that the wait obstructs other traffic. Moreover, vehicle 50a may not wait in the case where there is a possibility that the wait causes a decrease in service quality.

In the case where there is a vehicle (for example, vehicle 50b) subsequent to vehicle 50a, specifier 12 specifies vehicles 50a and 50b as a plurality of mobile bodies 50 that pass the remote operation point in the same time period. In other words, specifier 12 determines vehicles 50a and 50b as a group of remote operation with following. Although an example in which whether there is a subsequent vehicle is determined based on the sensing data of vehicle 50a, i.e. an example of determining the group of remote operation with following based on the sensing data of vehicle 50a, is described here, the group may be determined using, for example, the position information, travel information, and vehicle information of each vehicle managed by remote control system 10 when vehicle 50a requests remote operation.

In the case where there is a vehicle (vehicle 50b) subsequent to vehicle 50a (Step S52: Yes), determiner 13 determines whether the subsequent vehicle (vehicle 50b) is a vehicle that requires remote operation (Step S53).

For example, whether vehicle 50b is a vehicle that requires remote operation can be determined by determining whether vehicle 50b is an autonomous vehicle. This is because the request for remote operation by vehicle 50a which is an autonomous vehicle implies that vehicle 50b which is an autonomous vehicle traveling behind vehicle 50a also requires remote operation.

For example, whether vehicle 50b is an autonomous vehicle may be determined by image recognition of an image obtained from the sensor of vehicle 50a. For example, in the case where a feature specific to an autonomous vehicle is extracted from the appearance of the vehicle shown in the image, in the case where the vehicle registration plate shown in the image indicates an autonomous vehicle on the precondition that the vehicle registration plate is provided with information indicating whether the vehicle is an autonomous vehicle, or in the case where no driver is shown in the image, vehicle 50b can be determined as an autonomous vehicle.

For example, whether vehicle 50b is an autonomous vehicle may be determined from the position information of vehicle 50b. For example, in the case where remote control system 10 has the current position information of all autonomous vehicles subjected to management by remote control system 10, if the current position of vehicle 50b matches the current position of any autonomous vehicle managed by remote control system 10, vehicle 50b can be determined as an autonomous vehicle.

For example, whether vehicle 50b is an autonomous vehicle may be determined by vehicle 50a inquiring of vehicle 50b through inter-vehicle communication whether vehicle 50b is an autonomous vehicle.

For example, in the case where vehicle 50b (or a vehicle of the same vehicle type as vehicle 50b) has a track record of being remotely operated in the same remote operation point in the past, vehicle 50b may be determined as a vehicle that requires remote operation.

For example, in the case where vehicle 50b is an autonomous vehicle of level 3, the driver of vehicle 50b may be inquired whether to switch to the following travel mode or perform manual driving. In the case where the driver selects switching to following travel, vehicle 50b may be determined as a vehicle that requires remote operation.

For example, in the case where remote control system 10 can instruct vehicle 50b to perform following travel, vehicle 50b may be determined as a vehicle that requires remote operation. In the case where vehicle 50b is managed by a system other than remote control system 10 that manages vehicle 50a, remote control system 10 cannot instruct vehicle 50b to perform following travel.

In the case where vehicle 50b is a vehicle that requires remote operation, determiner 13 determines vehicle 50a as a remote operation target vehicle (i.e. first mobile body), and vehicle 50b as a following vehicle (i.e. second mobile body). Alternatively, determiner 13 may determine vehicle 50a that requests remote operation as a following vehicle, and vehicle 50b as a remote operation target vehicle. In this case, driving control may be performed on at least one of vehicle 50a or vehicle 50b so that vehicle 50a will be a vehicle subsequent to vehicle 50b.

In the case where vehicle 50b is a vehicle that requires remote operation (Step S53: Yes), presenter 14 presents the remote operation of vehicle 50a with following to the operator (Step S54), and instructor 15 instructs the subsequent vehicle (vehicle 50b) to follow vehicle 50a that requests remote operation (Step S55). In this way, vehicle 50b follows remotely operated vehicle 50a. Thus, just by remotely operating presented vehicle 50a, the operator can cause both vehicles 50a and 50b that pass the remote operation point in the same time period to travel at the remote operation point. This can reduce the burden on the operator in remotely operating the plurality of vehicles capable of autonomous movement at the same point in the same time period.

In the case where there is no vehicle subsequent to vehicle 50a (Step S52: No) or in the case where vehicle 50b is not a vehicle that requires remote operation (Step S53: No), presenter 14 presents normal remote operation to the operator (Step S56). In this case, the operator remotely operates vehicle 50a that is not followed by another vehicle.

### (Other Embodiments)

While an information processing method and an information processing system (remote control system 10) according to one or more aspects of the present disclosure have been described above by way of embodiments, the present disclosure is not limited to such embodiments. Other modifications obtained by applying various changes conceivable by a person skilled in the art to the embodiments and any combinations of the elements in different embodiments without departing from the scope of the present disclosure are also included in the scope of one or more aspects of the present disclosure.

For example, although the foregoing embodiment describes an example in which remote operation with following is performed in the case where mobile body 50 that is autonomously moving requires remote operation at the remote operation point, remote operation with following may be performed in the case where mobile body 50 that is autonomously moving requires manual driving at the remote operation point. Thus, an occupant of mobile body 50 can save the trouble of manually driving mobile body 50 at the remote operation point.

For example, although the foregoing embodiment describes an example in which the second mobile body follows the first mobile body, the second mobile body may be towed instead of following, and following and towing may be combined.

For example, the second mobile body may be set as a remote monitoring object by a remote monitoring operator. For example, the second mobile body is set as a monitoring object in a remote monitoring system, and monitored by a remote monitoring operator. The second mobile body may be set as the remote monitoring object in the case where the second mobile body satisfies a specific condition. Examples of the specific condition include the condition that the remote operation point is a place with poor visibility, the condition that the number or density of obstacles such as people and parked vehicles in and around the remote operation point is greater than or equal to a threshold, the condition that the traffic volume at the remote operation point is greater than or equal to a threshold, the condition that the remote operation point is a point where remote operation with following has not been performed in the past, the condition that the time of day in which remote operation with following is performed is evening or night, the condition that the skill or experience of the remote operation operator in remote operation with following is less than or equal to a threshold, and the condition that a plurality of second mobile bodies are selected. The determination for the specific condition may be performed based on sensing information obtained from a sensor in the first mobile body, the second mobile body, or the infrastructure or information (for example, map information, traffic information, weather information) collected from an external device. The remote monitoring operator is an operator different from the operator of the remote operation of the first mobile body.

The monitoring priority of the second mobile body may be set higher than the other monitoring objects. Moreover, the monitoring priority of the second mobile body satisfying a specific condition may be set high. Examples of the specific condition include the condition that the remote operation point is a place with poor visibility, the condition that the number or density of obstacles such as people and parked vehicles in and around the remote operation point is greater than or equal to a threshold, the condition that the traffic volume at the remote operation point is greater than or equal to a threshold, the condition that the remote operation point is a point where remote operation with following has not been performed in the past, the condition that the time of day in which remote operation with following is performed is evening or night, the condition that the skill or experience of the remote operation operator in remote operation with following is less than or equal to a threshold, and the condition that a plurality of second mobile bodies are selected.

The remote monitoring operator may be given the right to perform emergency stop operation on the second mobile body. When the remote monitoring operator emergency-stops the second mobile body, the remote operation of the first mobile body may be discontinued, or discontinuing the remote operation may be proposed to the remote operation operator. Further, the emergency stop of the second mobile body may be notified to the remote operation operator.

Control of not permitting the remote operation of the first mobile body in a state in which the second mobile body is not monitored may be added. For example, the remote operation of the first mobile body is not permitted unless the second mobile body is set as a remote monitoring object. Alternatively, whether the remote monitoring operator is monitoring the second mobile body may be determined, and the remote operation of the first mobile body may be permitted only in the case where the remote monitoring operator is determined as monitoring the second mobile body.

For example, the presently disclosed techniques can be implemented as a program for causing a processor to execute the steps included in the information processing method. Further, the presently disclosed techniques can be implemented as a non-transitory computer-readable recording medium such as CD-ROM in which the program is recorded.

For example, in the case where the presently disclosed techniques are implemented by a program (software), the steps can be executed by executing the program using hardware resources such as a CPU, memory, and an input/output circuit of a computer. In detail, the steps are executed by the CPU obtaining data from the memory, the input/output circuit, or the like, calculating the data, and outputting the calculation results to the memory, the input/output circuit, or the like.

Each of the elements included in the information processing system in the foregoing embodiment may be configured in the form of an exclusive hardware product, or may be implemented by executing a software program suitable for the element. Each of the elements may be implemented by means of a program executing unit, such as a CPU or a processor, reading and executing the software program recorded on a recording medium such as a hard disk or a semiconductor memory.

All or part of the functions of the information processing system according to the foregoing embodiment are typically implemented by LSI which is an integrated circuit. These may each be individually implemented as one chip, or may be partly or wholly implemented on one chip. The circuit integration technique is not limited to LSIs, and dedicated circuits or general-purpose processors may be used to achieve the same. A field programmable gate array (FPGA) which can be programmed after manufacturing the LSI, or a reconfigurable processor where circuit cell connections and settings within the LSI can be reconfigured, may be used.

### [Industrial Applicability]

The presently disclosed techniques can be used for autonomous vehicles and the like capable of autonomous driving and remote operation.

### [Reference Signs List]

- 10: remote control system
- 11: obtainer
- 12: specifier
- 13: determiner
- 14: presenter
- 15: instructor
- 16: storage
- 20: remote operation system
- 50: mobile body
- 50a, 50b: vehicle
- A1, A2, A3: area
- R1, R2: route

## Claims

1. An information processing method executed by a computer, the information processing method comprising:
obtaining (S11) a remote operation point at which remote operation of a mobile body (50) capable of autonomous movement and remote operation for movement is performed;
specifying (S12) a plurality of mobile bodies (50a, 50b) that pass the remote operation point in a same time period, based on a position of at least one mobile body;
determining (S13) a first mobile body (50a) to be remotely operated and a second mobile body (50b) to follow the first mobile body, out of the plurality of mobile bodies specified;
presenting (S14) remote operation of the first mobile body (50a) at the remote operation point to an operator, to cause the operator to perform the remote operation; and
instructing (S15) the second mobile body (50b) to follow the first mobile body (50a) during the remote operation of the first mobile body,
wherein the specifying includes:
obtaining a movement plan of the at least one mobile body; and
specifying the plurality of mobile bodies (50a, 50b) based on the position and the movement plan of the at least one mobile body, and
wherein the determining includes:
obtaining a position and a movement plan of each of the plurality of mobile bodies; and
determining a mobile body that arrives at the remote operation point earliest as the first mobile body (50a) and an other mobile body as the second mobile body (50b) out of the plurality of mobile bodies, based on the position and the movement plan of each of the plurality of mobile bodies.

2. The information processing method according to claim 1,
wherein the determining includes:
obtaining suitability of each of the plurality of mobile bodies (50a, 50b) for remote operation or following; and
determining, based on the suitability: a mobile body suitable for remote operation as the first mobile body and an other mobile body as the second mobile body out of the plurality of mobile bodies; or a mobile body suitable for following as the second mobile body and an other mobile body as the first mobile body out of the plurality of mobile bodies; or a mobile body not suitable for remote operation as the second mobile body and an other mobile body as the first mobile body out of the plurality of mobile bodies; or a mobile body not suitable for following as the first mobile body and an other mobile body as the second mobile body out of the plurality of mobile bodies.

3. The information processing method according to claim 1 or claim 2, further comprising:
determining whether the second mobile body is subsequent to the first mobile body at start of the remote operation, based on a position and a movement plan of each of the first mobile body and the second mobile body; and
instructing, when the second mobile body is not subsequent to the first mobile body, at least one of the first mobile body or the second mobile body to move so that the second mobile body will be subsequent to the first mobile body.

4. The information processing method according to claim 3,
wherein the instructing of the at least one of the first mobile body or the second mobile body includes:
obtaining a restriction on at least one of a moving time, a stop time, a moving speed, or a moving range; and
instructing the at least one of the first mobile body or the second mobile body to move according to the restriction.

5. The information processing method according to claim 1,
wherein the remote operation point is a point at which a mobile body that requests remote operation is located, and
in the specifying, the plurality of mobile bodies are specified based on, as the position of the at least one mobile body, a position of the mobile body that requests remote operation and a position of a mobile body around the mobile body that requests remote operation.

6. The information processing method according to any one of claim 1 to claim 5,
wherein in the determining, a mobile body that requests remote operation at the remote operation point is determined as the second mobile body.

7. The information processing method according to claim 6,
wherein in the determining, a mobile body estimated to request remote operation at the remote operation point is determined as the second mobile body, based on an operation property of whether the mobile body is capable of autonomous movement and remote operation, a history of remote operation of the mobile body, whether an occupant of the mobile body demands manual operation, or a management attribute of whether the mobile body is subjected to management.

8. The information processing method according to any one of claim 1 to claim 7,
wherein in the determining, the second mobile body is determined based on suitability for following, skill or experience of the operator in remote operation with following for mobile bodies, or a restriction on at least one of a moving time, a stop time, a moving speed, or a moving range.

9. The information processing method according to any one of claim 1 to claim 8,
wherein the presenting further includes determining to perform the remote operation of the first mobile body with following of the second mobile body, when a load of the operator in remote operation is greater than or equal to a threshold or an available capacity of the operator is less than a threshold or when a factor that induces remote operation is not an anomaly in a mobile body affecting movement thereof.

10. The information processing method according to any one of claim 1 to claim 9,
wherein the presenting further includes permitting the operator to remotely operate the first mobile body after the second mobile body is instructed to follow the first mobile body.

11. The information processing method according to any one of claim 1 to claim 10,
wherein the presenting further includes obtaining sensing data of a sensor in the second mobile body from the second mobile body and presenting the sensing data to the operator, during the remote operation of the first mobile body with following of the second mobile body.

12. The information processing method according to any one of claim 1 to claim 11,
wherein the presenting further includes providing the operator with an operation interface for controlling a sensor in the second mobile body, during the remote operation of the first mobile body with following of the second mobile body, and
the instructing further includes instructing the second mobile body to control the sensor based on an operation on the operation interface.

13. The information processing method according to any one of claim 1 to claim 12,
wherein the presenting further includes, when the first mobile body and the second mobile body differ in a movement property, presenting, to the operator, a movement locus of the second mobile body estimated based on the remote operation of the first mobile body by the operator and a movement property of at least the second mobile body, during the remote operation of the first mobile body with following of the second mobile body.

14. The information processing method according to any one of claim 1 to claim 13,
wherein the instructing includes instructing the second mobile body to keep following the first mobile body until the remote operation of the first mobile body with following of the second mobile body ends.

15. The information processing method according to any one of claim 1 to claim 14,
wherein the presenting further includes presenting, to the operator, a relationship between a remote operation end point and a position of the second mobile body based on the remote operation point, a position of the first mobile body, and the position of the second mobile body, during the remote operation of the first mobile body with following of the second mobile body.

16. An information processing system comprising:
an obtainer (11) that obtains a remote operation point at which remote operation of a mobile body (50) capable of autonomous movement and remote operation for movement is performed;
a specifier (12) that specifies a plurality of mobile bodies (50a, 50b) that pass the remote operation point in a same time period, based on a position of at least one mobile body;
a determiner (13) that determines a first mobile body (50a) to be remotely operated and a second mobile body (50b) to follow the first mobile body, out of the plurality of mobile bodies specified;
a presenter (14) that presents remote operation of the first mobile body (50a) at the remote operation point to an operator, to cause the operator to perform the remote operation; and
an instructor (15) that instructs the second mobile body (50b) to follow the first mobile body (50a) during the remote operation of the first mobile body
wherein the specifier:
obtains a movement plan of the at least one mobile body; and
specifies the plurality of mobile bodies based on the position and the movement plan of the at least one mobile body, and
the determiner:
obtains a position and a movement plan of each of the plurality of mobile bodies; and
determines a mobile body that arrives at the remote operation point earliest as the first mobile body (50a) and an other mobile body as the second mobile body (50b) out of the plurality of mobile bodies, based on the position and the movement plan of each of the plurality of mobile bodies.

## Patentansprüche

1. Informationsverarbeitungsverfahren, das von einem Computer ausgeführt wird, wobei das Informationsverarbeitungsverfahren Folgendes umfasst:
Erhalten (S11) eines Fernbedienungspunkts, an dem eine Fernbedienung eines mobilen Körpers (50), der zu einer autonomen Bewegung und einer Fernbedienung zur Bewegung in der Lage ist, durchgeführt wird;
Spezifizieren (S12) einer Vielzahl von mobilen Körpern (50a, 50b), die den Fernbedienungspunkt in einer selben Zeitperiode passieren, auf Basis einer Position von mindestens einem mobilen Körper;
Bestimmen (S13) eines ersten mobilen Körpers (50a), der fernzubedienen ist, und eines zweiten mobilen Körpers (50b), der dem ersten mobilen Körper folgt, aus der Vielzahl von spezifizierten mobilen Körpern;
Präsentieren (S14) einer Fernbedienung des ersten mobilen Körpers (50a) am Fernbedienungspunkt für einen Bediener, um den Bediener zu veranlassen, die Fernbedienung durchzuführen; und
Anweisen (S15) des zweiten mobilen Körpers (50b), dem ersten mobilen Körper (50a) während der Fernbedienung des ersten mobilen Körpers zu folgen,
wobei das Spezifizieren Folgendes beinhaltet:
Erhalten eines Bewegungsplans des mindestens einen mobilen Körpers; und
Spezifizieren der Vielzahl von mobilen Körpern (50a, 50b) auf Basis der Position und des Bewegungsplans des mindestens einen mobilen Körpers, und
wobei das Bestimmen Folgendes beinhaltet:
Erhalten einer Position und eines Bewegungsplans von jedem der Vielzahl von mobilen Körpern; und
Bestimmen eines mobilen Körpers, der am frühsten am Fernbedienungspunkt ankommt, als den ersten mobilen Körper (50a) und eines anderen mobilen Körpers als den zweiten mobilen Körper (50b) der Vielzahl von mobilen Körpern auf Basis der Position und des Bewegungsplans von jedem der Vielzahl von mobilen Körpern.

2. Informationsverarbeitungsverfahren nach Anspruch 1, wobei das Bestimmen Folgendes beinhaltet:
Erhalten einer Eignung von jedem der Vielzahl von mobilen Körpern (50a, 50b) für eine Fernbedienung oder ein Folgen; und
Bestimmen auf Basis der Eignung von Folgendem: einem mobilen Körper, der für eine Fernbedienung geeignet ist, als den ersten mobilen Körper und einem anderen mobilen Körper als den zweiten mobilen Körper der Vielzahl von mobilen Körpern; oder einem mobilen Körper, der für ein Folgen geeignet ist, als den zweiten mobilen Körper und einem anderen mobilen Körper als den ersten mobilen Körper der Vielzahl von mobilen Körpern; oder einem mobilen Körper, der für eine Fernbedienung nicht geeignet ist, als den zweiten mobilen Körper und einem anderen mobilen Körper als den ersten mobilen Körper der Vielzahl von mobilen Körpern; oder einem mobilen Körper, der zum Folgen nicht geeignet ist, als den ersten mobilen Körper und einen anderen mobilen Körper als den zweiten mobilen Körper der Vielzahl von mobilen Körpern.

3. Informationsverarbeitungsverfahren nach Anspruch 1 oder Anspruch 2, das ferner Folgendes umfasst:
Bestimmen auf Basis einer Position und eines Bewegungsplans von jedem des ersten mobilen Körpers und des zweiten mobilen Körpers, ob der zweite mobile Körper dem ersten mobilen Körper beim Starten der Fernbedienung folgt; und
wenn der zweite mobile Körper dem ersten mobilen Körper nicht folgt, Anweisen mindestens eines des ersten mobilen Körpers oder des zweiten mobilen Körpers, sich zu bewegen, derart, dass der zweite mobile Körper dem ersten mobilen Körper folgt.

4. Informationsverarbeitungsverfahren nach Anspruch 3,
wobei das Anweisen des mindestens einen des ersten mobilen Körpers oder des zweiten mobilen Körpers Folgendes beinhaltet:
Erhalten einer Einschränkung von mindestens einem von einer Bewegungszeit, einer Haltezeit, einer Bewegungsgeschwindigkeit oder einem Bewegungsbereich; und
Anweisen des mindestens einen des ersten mobilen Körpers oder des zweiten mobilen Körpers, sich gemäß der Einschränkung zu bewegen.

5. Informationsverarbeitungsverfahren nach Anspruch 1,
wobei der Fernbedienungspunkt ein Punkt ist, an dem sich der mobile Körper befindet, der eine Fernbedienung anfordert, und
die Vielzahl von mobilen Körpern werden beim Spezifizieren auf Basis der Position des mindestens einen mobilen Körpers, einer Position des mobilen Körpers, der eine Fernbedienung anfordert, und einer Position eines mobilen Körpers um den mobilen Körper herum, der eine Fernbedienung anfordert, spezifiziert.

6. Informationsverarbeitungsverfahren nach einem von Anspruch 1 bis Anspruch 5,
wobei beim Bestimmen ein mobiler Körper, der eine Fernbedienung am Fernbedienungspunkt anfordert, als der zweite mobile Körper bestimmt wird.

7. Informationsverarbeitungsverfahren nach Anspruch 6,
wobei beim Bestimmen auf Basis einer Bedienungseigenschaft, ob der mobile Körper zu einer autonomen Bewegung und einer Fernbedienung in der Lage ist, eines Verlaufs einer Fernbedienung des mobilen Körpers, ob ein Insasse des mobilen Körpers eine manuelle Bedienung fordert oder ein Verwaltungsattribut, ob der mobile Körper der Verwaltung unterliegt, ein mobiler Körper, von dem geschätzt wird, dass er eine Fernbedienung am Fernbedienungspunkt anfordert, als der zweite mobile Körper bestimmt wird.

8. Informationsverarbeitungsverfahren nach einem von Anspruch 1 bis Anspruch 7,
wobei beim Bestimmen auf Basis einer Eignung zum Folgen, einer Fertigkeit oder Erfahrung des Bedieners bei der Fernbedienung beim Folgen der mobilen Körper oder einer Einschränkung bei mindestens einem von einer Bewegungszeit, einer Haltezeit, einer Bewegungsgeschwindigkeit oder einem Bewegungsbereich der zweite mobile Körper bestimmt wird.

9. Informationsverarbeitungsverfahren nach einem von Anspruch 1 bis Anspruch 8,
wobei das Präsentieren ferner das Bestimmen beinhaltet, die Fernbedienung des ersten mobilen Körpers mit einem Folgen des zweiten mobilen Körpers durchzuführen, wenn eine Last des Bedieners bei der Fernbedienung größer als oder gleich einem Schwellwert ist oder eine verfügbare Kapazität des Bedieners kleiner als ein Schwellwert ist oder wenn ein Faktor, der eine Fernbedienung beinhaltet, keine Anomalie eines mobilen Körpers ist, die die Bewegung davon beeinträchtigt.

10. Informationsverarbeitungsverfahren nach einem von Anspruch 1 bis Anspruch 9,
wobei das Präsentieren ferner beinhaltet, es dem Bediener zu erlauben, den ersten mobilen Körper fernzubedienen, nachdem der zweite mobile Körper angewiesen wurde, dem ersten mobilen Körper zu folgen.

11. Informationsverarbeitungsverfahren nach einem von Anspruch 1 bis Anspruch 10,
wobei das Präsentieren ferner das Erhalten von Erfassungsdaten eines Sensors im zweiten mobilen Körper vom zweiten mobilen Körper und das Präsentieren der Erfassungsdaten für den Bediener während der Fernbedienung des ersten mobilen Körpers bei Folgen des zweiten mobilen Körpers beinhaltet.

12. Informationsverarbeitungsverfahren nach einem von Anspruch 1 bis Anspruch 11,
wobei das Präsentieren ferner das Bereitstellen während der Fernbedienung des ersten mobilen Körpers bei Folgen des zweiten mobilen Körpers einer Bedienungsschnittstelle zum Steuern eines Sensors im zweiten mobilen Körper für den Bediener beinhaltet, und
das Anweisen beinhaltet ferner das Anweisen des zweiten mobilen Körpers, den Sensor auf Basis einer Bedienung auf der Bedienungsschnittstelle zu steuern.

13. Informationsverarbeitungsverfahren nach einem von Anspruch 1 bis Anspruch 12,
wobei, wenn sich der erste mobile Körper und der zweite mobile Körper in einer Bewegungseigenschaft unterscheiden, das Präsentieren ferner das Präsentieren eines Bewegungsorts des zweiten mobilen Körpers, der auf Basis der Fernbedienung des ersten mobilen Körpers durch den Bediener und einer Bewegungseigenschaft mindestens des zweiten mobilen Körpers geschätzt wird, für den Bediener während der Fernbedienung des ersten mobilen Körpers bei Folgen des zweiten mobilen Körpers beinhaltet.

14. Informationsverarbeitungsverfahren nach einem von Anspruch 1 bis Anspruch 13,
wobei das Anweisen das Anweisen des zweiten mobilen Körpers, dem ersten mobilen Körper weiter zu folgen, bis die Fernbedienung des ersten mobilen Körpers bei Folgen des zweiten mobilen Körpers endet, beinhaltet.

15. Informationsverarbeitungsverfahren nach einem von Anspruch 1 bis Anspruch 14,
wobei das Präsentieren ferner das Präsentieren einer Beziehung zwischen einem Fernbedienungsendpunkt und einer Position des zweiten mobilen Körpers auf Basis des Fernbedienungspunkts, einer Position des ersten mobilen Körpers und der Position des zweiten mobilen Körpers für den Bediener während der Fernbedienung des ersten mobilen Körpers bei Folgen des zweiten mobilen Körpers beinhaltet.

16. Informationsverarbeitungssystem, das Folgendes umfasst:
einen Erhalter (11), der einen Fernbedienungspunkt erhält, an dem eine Fernbedienung eines mobilen Körpers (50), der zu einer autonomen Bewegung und einer Fernbedienung zur Bewegung in der Lage ist, durchgeführt wird;
einen Spezifizierer (12), der eine Vielzahl von mobilen Körpern (50a, 50b), die den Fernbedienungspunkt in einer selben Zeitperiode passieren, auf Basis einer Position von mindestens einem mobilen Körper spezifiziert;
einen Bestimmer (13), der einen ersten mobilen Körper (50a), der fernzubedienen ist, und einen zweiten mobilen Körper (50b), der dem ersten mobilen Körper folgt, aus der Vielzahl von spezifizierten mobilen Körpern bestimmt;
einen Präsentierer (14), der eine Fernbedienung des ersten mobilen Körpers (50a) am Fernbedienungspunkt für einen Bediener präsentiert, um den Bediener zu veranlassen, die Fernbedienung durchzuführen; und
einen Anweiser (15), der den zweiten mobilen Körper (50b) anweist, dem ersten mobilen Körper (50a) während der Fernbedienung des ersten mobilen Körpers zu folgen
wobei der Spezifizierer:
einen Bewegungsplan des mindestens einen mobilen Körpers erhält; und
die Vielzahl von mobilen Körpern auf Basis der Position und des Bewegungsplans des mindestens einen mobilen Körpers spezifiziert, und
der Bestimmer:
eine Position und einen Bewegungsplan von jedem der Vielzahl von mobilen Körpern erhält; und
einen mobilen Körper, der am frühsten am Fernbedienungspunkt ankommt, als den ersten mobilen Körper (50a) und einen anderen mobilen Körper als den zweiten mobilen Körper (50b) der Vielzahl von mobilen Körpern auf Basis der Position und des Bewegungsplans von jedem der Vielzahl von mobilen Körpern bestimmt.

## Revendications

1. Procédé de traitement d'informations exécuté par un ordinateur, le procédé de traitement d'informations comprenant les étapes suivantes :
obtenir (S11) un point de commande à distance où sont effectuées une commande à distance d'un corps mobile (50) en mesure de se déplacer de manière autonome et une commande à distance d'un déplacement ;
spécifier (S12) une pluralité de corps mobiles (50a, 50b) qui passent par le point de commande à distance dans une même période de temps sur la base d'une position d'au moins un corps mobile ;
déterminer (S13) parmi la pluralité de corps mobiles spécifiés un premier corps mobile (50a) à commander à distance et un deuxième corps mobile (50b) devant suivre le premier corps mobile ;
présenter (S14) à un opérateur une commande à distance du premier corps mobile (50a) au point de commande à distance pour amener l'opérateur à effectuer la commande à distance ; et
donner l'instruction (S15) au deuxième corps mobile (50b) de suivre le premier corps mobile (50a) lors de la commande à distance du premier corps mobile,
dans lequel la spécification comporte ce qui suit :
obtenir un plan de déplacement de l'au moins un corps mobile ; et
spécifier la pluralité de corps mobiles (50a, 50b) sur la base de la position et du plan de déplacement de l'au moins un corps mobile, et
dans lequel la détermination comporte ce qui suit :
obtenir une position et un plan de déplacement de chacun de la pluralité de corps mobiles ; et
déterminer le corps mobile qui arrive en premier au point de commande à distance comme premier corps mobile (50a), et déterminer un autre corps mobile de la pluralité de corps mobiles comme deuxième corps mobile (50b) sur la base de la position et du plan de déplacement de chacun de la pluralité de corps mobiles.

2. Procédé de traitement d'informations selon la revendication 1, dans lequel la détermination comporte ce qui suit :
obtenir l'aptitude de chacun de la pluralité de corps mobiles (50a, 50b) à une commande à distance ou à un suivi ; et
sur la base de l'aptitude, déterminer : un corps mobile adapté à la commande à distance comme premier corps mobile et un autre corps mobile de la pluralité de corps mobiles comme deuxième corps mobile ; ou un corps mobile adapté au suivi comme deuxième corps mobile et un autre corps mobile de la pluralité de corps mobiles comme premier corps mobile ; ou un corps mobile non adapté à la commande à distance comme deuxième corps mobile et un autre corps mobile de la pluralité de corps mobiles comme premier corps mobile ; ou un corps mobile non adapté au suivi comme premier corps mobile et un autre corps mobile de la pluralité de corps mobiles comme deuxième corps mobile.

3. Procédé de traitement d'informations selon la revendication 1 ou la revendication 2, comprenant en outre les étapes suivantes :
déterminer si le deuxième corps mobile est postérieur au premier corps mobile au début de la commande à distance sur la base d'une position et d'un plan de déplacement de chacun parmi le premier corps mobile et le deuxième corps mobile ; et
si le deuxième corps mobile n'est pas postérieur au premier corps mobile, donner l'instruction à au moins un parmi le premier corps mobile et le deuxième corps mobile de se déplacer de manière à ce que le deuxième corps mobile soit postérieur au premier corps mobile.

4. Procédé de traitement d'informations selon la revendication 3,
dans lequel l'instruction à l'au moins un parmi le premier corps mobile et le deuxième corps mobile comporte ce qui suit :
obtenir une restriction sur au moins un parmi un temps de déplacement, un temps d'arrêt, une vitesse de déplacement et une plage de déplacement ; et
donner l'instruction à l'au moins un parmi le premier corps mobile et le deuxième corps mobile de se déplacer selon la restriction.

5. Procédé de traitement d'informations selon la revendication 1,
dans lequel le point de commande à distance est un point où est situé un corps mobile demandant une commande à distance, et
lors de la spécification, la pluralité de corps mobiles sont spécifiés, comme position de l'au moins un corps mobile, sur la base d'une position du corps mobile demandant une commande à distance et d'une position d'un corps mobile aux alentours du corps mobile demandant une commande à distance.

6. Procédé de traitement d'informations selon l'une des revendications 1 à 5,
dans lequel, lors de la détermination, un corps mobile demandant une commande à distance au point de commande à distance est déterminé comme deuxième corps mobile.

7. Procédé de traitement d'informations selon la revendication 6,
dans lequel, lors de la détermination, lorsqu'on estime qu'un corps mobile demande une commande à distance au point de commande à distance, il est déterminé comme deuxième corps mobile sur la base d'une propriété de commande indiquant si le corps mobile est approprié pour un déplacement autonome et une commande à distance, un historique de commande à distance du corps mobile, si un occupant du corps mobile demande une opération manuelle, ou un attribut de gestion indiquant si le corps mobile est soumis à une gestion.

8. Procédé de traitement d'informations selon l'une des revendications 1 à 7,
dans lequel, lors de la détermination, le deuxième corps mobile est déterminé sur la base de l'aptitude au suivi, de la compétence ou de l'expérience de l'opérateur dans la commande à distance de corps mobiles avec suivi, ou d'une restriction sur au moins un parmi un temps de déplacement, un temps d'arrêt, une vitesse de déplacement et une plage de déplacement.

9. Procédé de traitement d'informations selon l'une des revendications 1 à 8,
dans lequel la présentation comporte en outre le fait de déterminer la réalisation de la commande à distance du premier corps mobile avec suivi par le deuxième corps mobile lorsqu'une charge de l'opérateur dans la commande à distance est supérieure ou égale à un seuil, qu'une capacité disponible de l'opérateur est inférieure à un seuil, ou lorsqu'un facteur qui induit une commande à distance n'est pas une anomalie dans un corps mobile affectant son déplacement.

10. Procédé de traitement d'informations selon l'une des revendications 1 à 9,
dans lequel la présentation comporte en outre le fait d'autoriser l'opérateur à commander à distance le premier corps mobile après que le deuxième corps mobile a reçu l'instruction de suivre le premier corps mobile.

11. Procédé de traitement d'informations selon l'une des revendications 1 à 10,
dans lequel la présentation comporte en outre le fait d'obtenir des données de détection d'un capteur dans le deuxième corps mobile à partir du deuxième corps mobile et de présenter les données de détection à l'opérateur lors de la commande à distance du premier corps mobile avec suivi par le deuxième corps mobile.

12. Procédé de traitement d'informations selon l'une des revendications 1 à 11,
dans lequel la présentation comporte en outre le fait de fournir à l'opérateur une interface de commande pour contrôler un capteur dans le deuxième corps mobile lors de la commande à distance du premier corps mobile avec suivi par le deuxième corps mobile, et
l'instruction comporte en outre le fait de donner l'instruction au deuxième corps mobile de contrôler le capteur sur la base d'une commande sur l'interface de commande.

13. Procédé de traitement d'informations selon l'une des revendications 1 à 12,
dans lequel, lorsque le premier corps mobile et le deuxième corps mobile ont des propriétés de déplacement différentes, la présentation comporte en outre le fait de présenter à l'opérateur un lieu de déplacement du deuxième corps mobile estimé sur la base de la commande à distance du premier corps mobile par l'opérateur et d'une propriété de déplacement d'au moins le deuxième corps mobile lors de la commande à distance du premier corps mobile avec suivi par le deuxième corps mobile.

14. Procédé de traitement d'informations selon l'une des revendications 1 à 13,
dans lequel l'instruction comporte le fait de donner l'instruction au deuxième corps mobile de continuer à suivre le premier corps mobile jusqu'à la fin de la commande à distance du premier corps mobile avec suivi par le deuxième corps mobile.

15. Procédé de traitement d'informations selon l'une des revendications 1 à 14,
dans lequel la présentation comporte en outre le fait de présenter à l'opérateur une relation entre un point d'extrémité de commande à distance et une position du deuxième corps mobile sur la base du point de commande à distance, d'une position du premier corps mobile et de la position du deuxième corps mobile lors de la commande à distance du premier corps mobile avec suivi par le deuxième corps mobile.

16. Système de traitement d'informations comprenant :
un dispositif d'obtention (11) qui obtient un point de commande à distance où sont effectuées une commande à distance d'un corps mobile (50) en mesure de se déplacer de manière autonome et une commande à distance d'un déplacement ;
un dispositif de spécification (12) qui spécifie une pluralité de corps mobiles (50a, 50b) qui passent par le point de commande à distance dans une même période de temps sur la base d'une position d'au moins un corps mobile ;
un dispositif de détermination (13) qui détermine parmi la pluralité de corps mobiles spécifiés un premier corps mobile (50a) à commander à distance et un deuxième corps mobile (50b) devant suivre le premier corps mobile ;
un dispositif de présentation (14) qui présente à un opérateur une commande à distance du premier corps mobile (50a) au point de commande à distance pour amener l'opérateur à effectuer la commande à distance ; et
un dispositif d'instruction (15) qui donne l'instruction au deuxième corps mobile (50b) de suivre le premier corps mobile (50a) lors de la commande à distance du premier corps mobile,
dans lequel le dispositif de spécification :
obtient un plan de déplacement de l'au moins un corps mobile ; et
spécifie la pluralité de corps mobiles sur la base de la position et du plan de déplacement de l'au moins un corps mobile, et
le dispositif de détermination :
obtient une position et un plan de déplacement de chacun de la pluralité de corps mobiles ; et
détermine le corps mobile qui arrive en premier au point de commande à distance comme premier corps mobile (50a), et détermine un autre corps mobile de la pluralité de corps mobiles comme deuxième corps mobile (50b) sur la base de la position et du plan de déplacement de chacun de la pluralité de corps mobiles.
